# EUROPEAN PATENT APPLICATION

(11) **EP 4 516 513 A1**
(43) Date of publication of application: **05.03.2025**
(21) Application number: 22940133.6
(22) Date of filing: 27.04.2022
(51) Int. Cl.: B41J 2/17, B41J 2/01, B41J 2/185

(54) **INKJET RECORDING DEVICE, AND INKJET RECORDING SYSTEM**

(71) Applicant: Hitachi Industrial Equipment Systems Co., Ltd., Tokyo 101-0021 (JP)
(72) Inventor: ARIMA Takahiro, Tokyo 101-0021 (JP); TANIGUCHI Kazuhiko, Tokyo 101-0021 (JP); OKAWA Keisuke, Tokyo 101-0021 (JP); OKAMOTO Yusuke, Tokyo 101-0021 (JP)
(74) Representative: MERH-IP Matias Erny Reichl Hoffmann Patentanwälte PartG mbB
(86) International application number: PCT/JP2022/019041
(87) International publication number: WO 2023/209854

(57) **Abstract**

The invention provides an inkjet marking apparatus and an inkjet marking system enabling it to remotely perform maintenance management including a print head cleaning process and the like. There is disclosed an inkjet marking apparatus equipped with a print head including a nozzle which spouts out ink while the ink turns into particles, a charging electrode which gives charge to ink particles spouted out, a deflecting electrode which deflects the charged ink particles, and a gutter which collects non-used ink; a main unit equipped with an ink supply path to supply ink in an ink container to the print head, an ink collection path to collect ink not used for printing into the ink container, a solvent supply path to supply a solvent in a solvent container to the ink container, and flow rate regulators which regulate flows of the ink and the solvent in these respective paths; a main unit controller which controls operation of the flow rate regulators in the main unit and the print head; and a head receptacle unit including a head holding part to set and hold the print head secured in place and a print head detector which detects that the print head has been set secured in place, wherein the main unit controller starts jetting of the ink from the nozzle when a preset start time comes, provided that it is detected that the print head has been set secured in the head receptacle unit.

## Description

### Technical Field

The present invention relates to a continuous injection type inkjet marking apparatus and an inkjet marking system using same.

### Background Art

As technology regarding a continuous injection type inkjet marking apparatus, a technology described in, e.g., Japanese Patent Application Laid-Open No. 2021-14040 (Patent Literature (PTL) 1) is known. In PTL 1, an inkjet marking apparatus is described that includes a print head which is supplied with ink and makes a print and a main unit which includes an ink container to accommodate ink and a solvent container to accommodate a solvent and supplies ink in the ink container to the print head. The print head is equipped with a nozzle which spouts out ink, while the ink turns into particles, a charging electrode which gives charge to the ink particles spouted out from the nozzle depending on what is to be printed, a deflecting electrode which changes the flying direction of the thus charged ink particles, and a gutter which collects the ink particles not contributing to printing. Furthermore, the inkjet marking apparatus is provided with a head cleaning unit including a cleaning tank where to set the print head secured in place, a cleaning nozzle which spouts out a solvent toward the print head set secured in the cleaning tank, and a collection container which underlies the cleaning tank and collects the solvent after cleaning and a drive unit which supplies the solvent to the cleaning nozzle.

Also, in PTL 1, an inkjet marking apparatus is described that implements control, in duration when the print head is set secured in place, to supply ink in the ink container to the nozzle and collect ink particles spouted out from the nozzle through the gutter and into the ink container at certain intervals. Also, an inkjet marking apparatus adapted to spout out a solvent from the cleaning nozzle toward the print head set secured in the head cleaning unit, wash away ink contamination from the print head and, then, blow out air to dry off the solvent adhered to the print head.

Then, according to PTL 1, with the print head secured in the head cleaning unit, an ink circulation process to circulate ink by spouting out ink from the nozzle of the print head and collecting the ink through the gutter is performed periodically at an interval of about once every two to three days, thereby reducing trouble such as ink stuck to solenoid valves or the like when the apparatus is used (started up to operate) next time. Information (such as whether or not abnormality occurs) during the run of such ink circulation process can be checked through an operating screen of the inkjet marking apparatus.

### Citation List

### Patent Literature

PTL 1: Japanese Patent Application Laid-Open No. 2021-14040

### Summary of Invention

### Technical Problem

By the way, an inkjet marking apparatus of this kind is placed in a production factory or the like and, therefore, it is easily influenced by an ambient environment in winter. For example, warming control with a heater becomes necessary at low temperatures and it takes time about 10 to 20 minutes until the apparatus can actually be used for printing after a startup operation.

Consequently, there is a problem below. For instance, if startup processing is set to be performed immediately before an actual printing process is performed, it would be impossible to run the printing process immediately after startup, since time it should take to start the run may become longer depending on usage environment conditions (low temperatures) of the inkjet marking apparatus.

There is also a problem below. If power is interrupted for some reason, setting of the ink circulation process has to be performed again via an input panel of the inkjet marking apparatus and this causes poor usability.

Furthermore, it is a premise that setting of the ink circulation process is performed via the input panel of the inkjet marking apparatus and an operator needs to take the trouble to go to a place where the inkjet marking apparatus is installed, and this is also a poor usability problem.

An object of the present invention is to provide a novel inkjet marking apparatus and an inkjet marking system using same, making it possible to solve at least one or more of the problems noted above.

### Solution to Problem

A first feature of the present invention is as described below. An inkjet marking apparatus is equipped with a print head including a nozzle which spouts out supplied ink while the ink turns into particles, a charging electrode which gives charge to ink particles spouted out from the nozzle, a deflecting electrode which deflects the ink particles charged by the charging electrode, and a gutter which collects non-used ink not used for printing; a main unit including an ink supply path to supply ink in an ink container to the print head, an ink collection path to collect the ink not used for printing into the ink container, a solvent supply path to supply a solvent in a solvent container to the ink container, and flow rate regulators which regulate flows of the ink and the solvent in these respective paths; a main unit controller which controls operation of the flow rate regulators in the main unit and the print head; and a head receptacle unit including a head holding part to set and hold the print head secured in place and a print head detector which detects that the print head has been set secured in place. The main unit controller starts jetting of the ink from the nozzle when a preset start time comes, provided that it is detected that the print head has been set secured in the head receptacle unit.

A second feature of the present invention resides in the fact that system equipment includes the foregoing inkjet marking apparatus; a server which is connected to the inkjet marking apparatus via a first communication network and retains information set through a setting screen of the inkjet marking apparatus; and an external control appliance which is connected to the sever via a second communication network and equipped with an external operating and display unit which displays the setting screen acquired from the server to set at least the start time to start jetting of the ink, wherein the external control appliance transmits the start time input through the setting screen on the external operating and display unit to the inkjet marking apparatus via the server and controls the inkjet marking apparatus based on the start time.

According to the present invention, it is possible to yield at least one or more of advantageous effects as follows: the ink circulation process can be run at any optional time; the inkjet marking apparatus can be started up quickly; after the apparatus is powered off, the ink circulation process can be run when power is connected to the apparatus without specifying new settings; and setting of the ink circulation process can be performed from an external control appliance.

### Brief Description of Drawings

Figure 1 is a configuration diagram depicting an overall overview of an inkjet marking apparatus and an inkjet marking system according to an embodiment of the present invention.
Figure 2 is a path configuration diagram depicting how ink supply paths are configured in the inkjet marking apparatus in Figure 1.
Figure 3 is a block diagram depicting a configuration of a control section of the inkjet marking apparatus in Figure 1.
Figure 4 is a configuration diagram depicting a configuration of a head receptacle unit in Figure 1 with a collection container removed from the head receptacle unit.
Figure 5 is a configuration diagram depicting the head receptacle unit in Figure 1 with the collection container and the print head set in place in the head receptacle unit.
Figure 6 is a path configuration diagram to explain the flows (marked with bold lines) of ink, a liquid such as a solvent, and gas such as air or volatile gas when the ink circulation process is performed.
Figure 7 is a path configuration diagram to explain the flows (marked with bold lines) of ink, a liquid such as a solvent, and gas such as air or volatile gas in a state when preparation for the printing process is complete upon termination of startup processing.
Figure 8 is a path configuration diagram to explain the flows (marked with bold lines) of ink, a liquid such as a solvent, and gas such as air or volatile gas when a head cleaning process is performed.
Figure 9 is an explanatory diagram depicting an example of a display screen which is displayed on the operating and display unit of the inkjet marking apparatus as an embodiment of the invention disclosed herein.
Figure 10 is an explanatory diagram depicting an example of a setting screen which is displayed on the operating and display unit of the inkjet marking apparatus as an embodiment of the invention disclosed herein.
Figure 11 is an explanatory diagram to explain settings information to be stored in a RAM.
Figure 12 is a flowchart diagram explaining control processing to execute a decision to start the ink circulation process and the printing process.
Figure 13 is a flowchart diagram explaining control processing to run the ink circulation process, including control processing to stop the ink circulation process automatically.
Figure 14 is an explanatory diagram depicting an example of a display screen which is displayed when the ink circulation process is run.
Figure 15 is an explanatory diagram to explain an operation which is controlled to stop the ink circulation process automatically, as is set on the setting screen depicted in Figure 10.
Figure 16 is an explanatory diagram for an instance in which to stop jetting of ink automatically in the printing process by a setting through the operating and display unit of the inkjet marking apparatus as an embodiment of the invention disclosed herein.
Figure 17 is a flowchart diagram explaining control processing to run the printing process, including control processing to stop the printing process manually.
Figure 18 is an explanatory diagram depicting an example of a display screen which is displayed when the printing process is run.
Figure 19 is an explanatory diagram to explain an operation which is controlled to stop jetting of ink manually in the printing process, as is set on the setting screen depicted in Figure 16.
Figure 20 is an explanatory diagram depicting another example of a setting screen which is displayed on the operating and display unit of the inkjet marking apparatus as an embodiment of the invention disclosed herein.
Figure 21 is an explanatory diagram to explain an operation which is controlled to stop the printing process manually, as is set on the setting screen depicted in Figure 20.
Figure 22 is an explanatory diagram depicting yet another example of a setting screen which is displayed on the operating and display unit of the inkjet marking apparatus as an embodiment of the invention disclosed herein.
Figure 23 is an explanatory diagram to explain an operation which is controlled to stop the printing process manually and automatically, as is set on the setting screen depicted in Figure 22.
Figure 24 is an explanatory diagram to explain exchange of information among an inkjet marking apparatus, a cloud server, and an external control appliance in an inkjet marking system as an embodiment of the invention disclosed herein.
Figure 25 is an explanatory diagram to explain a display screen on an operating and display unit of an external control appliance.
Figure 26 is an explanatory diagram depicting an example of a setting screen which is displayed on the operating and display unit depicted in Figure 25.
Figure 27 is an explanatory diagram to explain exchange of information between an inkjet marking apparatus and an external control appliance in an inkjet marking system as another embodiment of the invention disclosed herein.

### Description of Embodiments

In the following, embodiments of the present invention are described with drawings. The present invention is not limited to the embodiments as described below and the scope of the invention covers diverse modifications and applications in the technical concept of the invention. In the respective drawings which will be referred to in the following context, identical components or the like are assigned identical numbers (reference designators) and description on components or the like described already may be omitted.

### <Configuration of an inkjet marking system>

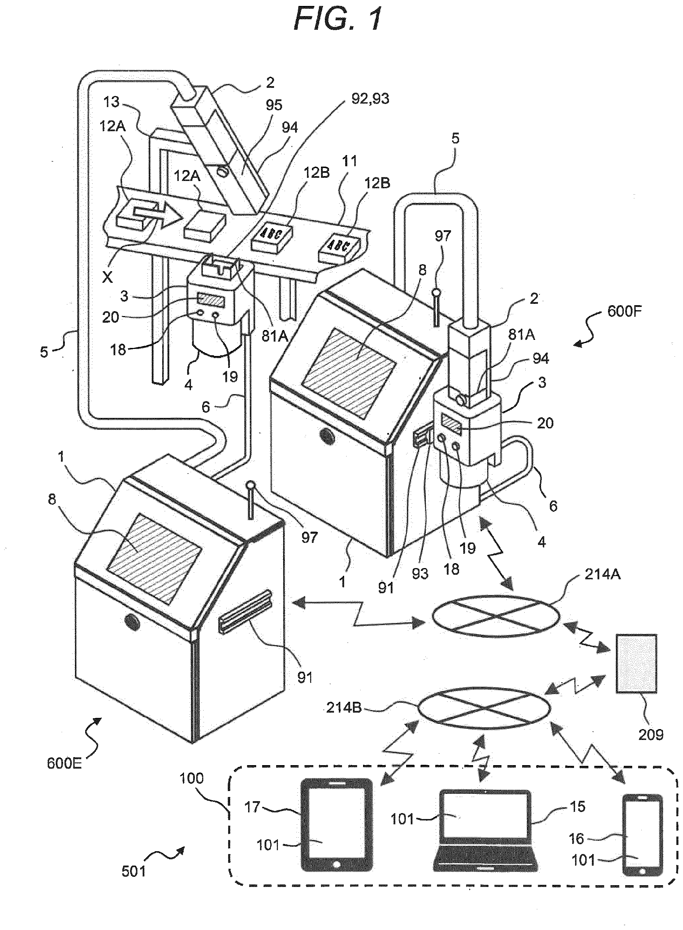

With regard to an inkjet marking apparatus and an inkjet marking system of the present invention, to begin with, how they are used is described with Figure 1. Figure 1 depicts circumstances where an inkjet marking apparatus according to an embodiment of the present invention is used.

In Figure 1, an inkjet marking system 501 is made up of units of an inkjet marking apparatus 600E or 600F, a cloud server 209 which communicates by radio with these units of the inkjet marking apparatus 600 via a communication network 214A, and external control appliances 100 which communicate by radio with the cloud server 209 via a communication network 214B.

Each of the inkjet marking apparatus units 600E and 600F is equipped with a main unit 1, a print head 2 connected to the main unit 1 with a cable (for the print head) 5, and a head receptacle unit 3 connected to the main unit 1 with a cable (for the head receptacle unit) 6. Here, the head receptacle unit 3 basically has a function of housing the print head and, also, a function of cleaning the print head by spouting a cleaning solution to it may be added thereto. The head receptacle unit 3 which will be described hereinafter is configured with the addition of the function of cleaning the print head.

The inkjet marking apparatus 600E is depicted with the print head 2 set up beside a production line. In addition, the inkjet marking apparatus 600F is depicted with the print head 2 removed from the production line and set in the head receptacle unit 3. Additionally, a collection container 4 installed beneath the head receptacle unit 3 is provided to collect the cleaning solution after cleaning the print head by the head receptacle unit 3.

The inkjet marking apparatus 600E is installed aside a production line in a factory where, e.g., food, beverages, etc. are produced and the main unit 1 is set up in a place where an enough space required for, inter alia, a periodical maintenance operation is available. The print head 2 is fixed to a support bracket 13 set up beside a belt conveyor 11 and disposed in close proximity to the conveyor to make a print on printing target objects 12A, 12B which are carried in a direction of arrow X on the production line such as the belt conveyor 11.

In addition, a protective cover 95 is installed on the print head 2 in order to protect internal parts of the print head 2. Also, printing target objects 12B are depicted as those being transported on the belt conveyor 11 after print has been made on them by the print head 2. A head base 94 of the print head 2 is covered with the above protective cover 95.

Here, the main unit 1 in Figure 1 has a reservoir inside it to accommodate (preserve) ink for printing and supplies ink to the print head 2 through the cable (for the print head) 5 by controlling its internal drive components (pumps and solenoid valves). Also, details on an internal path configuration inside the main unit 1 and a main unit controller will be described later.

An operating and display unit 8 is set up on an upper side of the main unit 1 and a touch-input display panel is used for it here. Through touch interactions with the operating and display unit 8, an operator can instruct the main unit controller to start or stop the apparatus and set what is to be printed on the printing target objects 12A.

In addition, the operating and display unit 8 is configured to display a screen to display ink circulation and printing settings to enable an operator to set automatic run of an ink circulation process or a printing process; this becomes a feature of an embodiment of the invention disclosed herein. With regard to how this screen is configured, additional explanations will be provided later using drawings.

The head receptacle unit 3 is set up in periphery of the print head 2. The head receptacle unit 3 of the inkjet marking apparatus 600E is fixed by engaging a fitting part 93 assembled to the head receptacle unit 3 with a fixing jig 92 assembled to the belt conveyor 11. Furthermore, the head receptacle unit 3 is equipped with a head holding part 81A for setting the print head 2 secured in the head receptacle unit.

The head receptacle unit 3 is further equipped with a start button 18 for starting the process of cleaning the print head 2, a stop button 19 for stopping the process of cleaning the print head 2, and a display 20 for allowing a worker to be aware of a confirmation message and an alarm of warning, abnormality, etc. This display 20, for example, may light on/off or light in different colors to allow a worker to be aware of an operating status or whether or not abnormality occurs.

In addition, in an embodiment of the invention disclosed herein, it is also possible to carry out cleaning of the print head 2 when ink circulation is performed automatically, without relying on the start button 18 and the stop button 19. Additional explanations on this will also be provided later using drawings.

For the inkjet marking apparatus 600E of an embodiment of the invention disclosed herein, its head receptacle unit 3 is situated stationary near the belt conveyor 11; however, the head receptacle unit 3 can be re-installed freely in a place where it is easy to operate by the user. It is preferable to make the length of the cable (for the head receptacle unit) 6 connecting the main unit 1 and the head receptacle unit 3 equal to or longer than the length of the cable 5 connecting the main unit 1 of the inkjet marking apparatus 600 and the print head 2. This is intended to ensure an adequate degree of freedom of where to install the head receptacle unit.

The main unit 1 also has a fixing part 91 for securing the head receptacle unit 3 and the head receptacle unit 3 can also be used in such a way as to remove the head receptacle unit 3 from the fixing jig (for the conveyor) 92 and re-install it in the fixing part 91. In a state when the inkjet marking apparatus 600F is used, the head receptacle unit 3 can also be fixed to the main unit 1 by engaging its fitting part 93 with the fixing part 91 assembled to the main unit 1.

The head receptacle unit 3 of the inkjet marking apparatus 600F is installed to the main unit 1. By enabling the head receptacle unit 3 to be fixed to the main unit 1, the head receptacle unit 3 can be put in place, even if there is no space to install the head receptacle unit 3, inter alia, in proximity to the belt conveyor 11.

Then, an explanation is provided with regard to a state in which the print head 2 is set secured in the head receptacle unit 3 of the inkjet marking apparatus 600F. The print head 2 is set secured in place by inserting the print head 2 in the forward direction into the head holding part 81A of the head receptacle unit 3. By thus setting the print head 2 secured in the head receptacle unit, the inkjet marking apparatus 600 of an embodiment of the invention disclosed herein enables cleaning of the print head 2 with a solvent that is supplied from the main unit 1 via the cable (for the head receptacle unit) 6.

An inkjet marking system 503 is made up of units of an inkjet marking apparatus 600E or 600F, a cloud server 209 which communicates by radio with the inkjet marking apparatus 600 via a communication network 214A, and external control appliances 100 which communicate by radio with the cloud server 209 via a communication network 214B.

For the external control appliances 100, equipment such as a personal computer 15, a smartphone 16, and a tablet 17 can be used. Each of the external control appliances 100 is equipped with an external operating and display unit 101 through which a display screen can be displayed via the cloud server 209 in the same way as for the operating and display unit 8 of the inkjet marking apparatus 600, and input of settings information or the like can be performed in the same way as for the operating and display unit 8 of the inkjet marking apparatus 600.

The inkjet marking apparatus 600E, 600F is equipped with an antenna 97 for connecting to the communication network. 214A. The inkjet marking apparatus 600E, 600F is configured to be connected with the external control appliances 100 through the use of the communication networks 214, 214 and the cloud server 209.

Specifically, the inkjet marking apparatus 600E, 600F is connected to the first communication network 214A and the first communication network 214A is further connected to the cloud server 209. Again, the cloud server 209 is connected to the second communication network 214B and the second communication network 214B is further connected to the external control appliances 100.

In this way, to the cloud server 209 in a central position, the inkjet marking apparatus 600E, 600F is connected via the first communication network 214A and the external control appliances 100 are connected via the second communication network 214B. By virtue of the system configuration as described above, it is possible to obtain an advantageous effect of facilitating maintenance management in a broad area.

As the communication networks 214A, 214B, "LAN (Local Area Network)", "WAN (Wide Area Network)", "Internet", "cellular phone networks", communication networks as a combination of these networks, etc. can be used.

### <Ink supply path configuration>

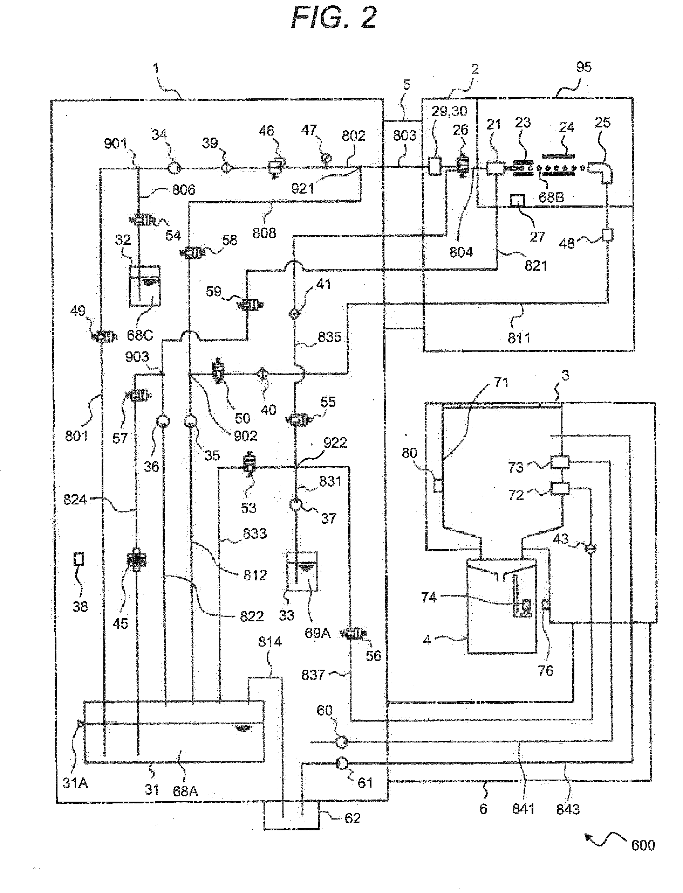

Next, an ink path configuration in the inkjet marking apparatus 600 of an embodiment of the invention disclosed herein is explained with Figure 2. Figure 2 depicts an overall configuration of paths through which fluid such as ink, gas, or others flows inside the inkjet marking apparatus 600 of an embodiment of the invention disclosed herein. Here, solenoid valves that control the flow of a liquid such as ink and gas (air or a volatile solvent) function as "flow rate regulators".

First, descriptions are provided about ink supply paths (paths 801 to 804) in the inkjet marking apparatus 600. In Figure 2, the main unit 1 is equipped with a main ink container 31 which preserves ink 68A for printing. The main ink container 31 is equipped with a liquid level sensor 31A which detects whether or not ink 68A in the main ink container 31 reaches a reference liquid level indicative of an appropriate amount for being preserved inside the apparatus.

The main ink container 31 is connected with a path (for supply) 801 in a portion of it filled with the ink 68A and a solenoid valve (for supply) 49 which opens and closes the path is installed in the middle of the path 801. The path 801 is further connected with a pump (for supply) 34 which is installed in a path 802 and used to suction and pump the ink 68A via a joint path 901. The path is in turn connected with a filter (for supply) 39 which removes foreign matters mixed in the ink 68A at the output side of the pump (for supply) 34.

The filter (for supply) 39 is connected with a pressure regulating valve 46 which regulates the pressure of the ink 68A pumped out from the pump (for supply) 34 to be suitable for printing. The pressure regulating valve 46 is connected with a pressure sensor 47 which measures the pressure of the ink 68A supplied to a nozzle 21. The path 802 in which the pressure sensor 47 is located is connected with a path 803 passing through the cable (for the print head) 5 via a branch path 921. The path 803 is connected with a heater 29 which is provided inside the print head 2 and warms up the ink 68A supplied to the nozzle 21. The heater 29 is connected with a changeover valve 26 which controls whether to supply the ink 38A to the nozzle 21.

The changeover valve 26 is connected with the nozzle 21 equipped with a discharge outlet 21A to discharge the ink 68A via a path 804. The changeover valve 26 is a three-way solenoid valve. The path 803 for ink supply and a path 835 for nozzle cleaning are connected to the changeover valve 26 and this valve is able to switch over between the ink 68A and a solvent 69A supplied to the nozzle 21.

In a straight direction of the discharge outlet 21A of the nozzle 21, a charging electrode 23 to apply a certain charge amount to ink particles 68B, a deflecting electrode 24 to deflect the ink particles 68B for use for printing, and a gutter 25 to catch ink particles 68B that fly straight without being charged and deflected, as they are not used for printing, are arranged in place.

Next, descriptions are provided about ink collection paths (811 to 812) in the inkjet marking apparatus 600. In Figure 2, the gutter 25 is connected with a path 811 and a charge sensor 48 is located in the path 811 to detect whether ink particles 68B to which a certain charge amount has been applied by the charging electrode 23 are collected. In turn, the path 811. passes through the cable (for the print head) 5 and is connected with a filter (for collection) 40 which is located inside the main unit 1 and removes foreign matters mixed in the ink, and the filter (for collection) 40 is connected with a solenoid valve (for collection) 50 which opens and closes the path.

The solenoid valve (for collection) 50 is connected with a pump (for collection) 35 which is located in a path 812 connected via a joint path 902 and suctions the ink particles 68B caught by the gutter 25. The pump (for collection) 35 is connected to the main ink container 31. By opening the solenoid valve 50 and driving the pump 35, the ink particles 68B caught by the gutter 25 are collected into the main ink container 31.

Then, descriptions are provided about an exhaust path (a path 814) in the inkjet marking apparatus 600 of an embodiment of the invention disclosed herein. The exhaust path is configured such that the path 814 is connected to the main ink container 31 in an upper space not contacting the ink 68A and the path 814 is connected to an exhaust duct connection port 62 communicating with space outside the main unit 1.

Then, descriptions are provided about ink circulation paths (paths 821 to 822) in the inkjet marking apparatus 600 of an embodiment of the invention disclosed herein. The nozzle 21 provided inside the print head 2 is connected with a path 821 passing through the cable (for the print head) 5 besides the path 804 for ink supply. In this path 821, a solenoid valve (for circulation) 59 which is provided inside the main unit 1 and opens and closes the flow path is located.

The solenoid valve (for circulation) 59 is connected with a path 822 via a joint path 903 and a pump (for circulation) 36 which suctions the ink from the nozzle 21 is located in the path 822. The path is configured such that the pump (for circulation) 36 is in turn connected to the main ink container 31.

Then, descriptions are provided about viscosity measurement paths (paths 822 to 824) in the inkjet marking apparatus 600 of an embodiment of the invention disclosed herein. In Figure 2, the main ink container 31 is connected with a path (for viscosity measurement) 824 in a portion of it filled with the ink 68A. The path (for viscosity measurement) 824 is connected with a viscosity measuring instrument 45 in order to perceive the viscosity of the ink 68A in the main ink container 31. The viscosity measuring instrument 45 is connected with a solenoid valve (for viscosity measurement) 57 which opens and closes the path.

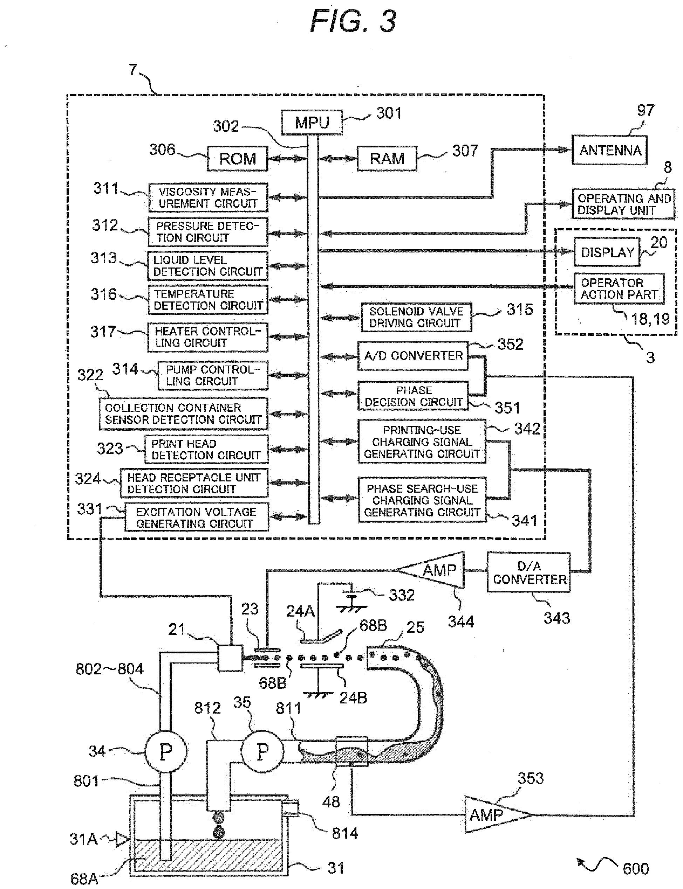

The viscosity measurement paths are configured such that the solenoid valve (for viscosity measurement) 57 is connected with the pump (for circulation) 36 located in the path 822 via the joint path 903. This enables it to circulate the ink 68A in the main ink container 31 through the viscosity measurement paths and measure the viscosity of the ink 68A. Thus, measured viscosity is input to the main unit controller 7 (not depicted in Figure 2, see Figure 3) and used for control of the viscosity of the ink 68 in the main ink container 31.

Next, descriptions are provided about solvent replenishment paths (paths 831 and 83) in the inkjet marking apparatus 600 of an embodiment of the invention disclosed herein. In Figure 2, the main unit 1 is equipped with a solvent container 33 which preserves the solvent 69A for use for replenishing the main ink container 31 with the solvent, nozzle cleaning, or head cleaning. The solvent container 33 is connected with a path 831 in a portion of it filled with the solvent 69A and a pump (for solvent) 37 which is used to suction and pump the solvent is located in the path 831. The pump (for solvent) 37 is in turn connected with a branch path 922 in order to change the destination to supply the solvent 69A according to purpose.

The solvent replenishment paths are configured such that the branch path 922 is connected with a solenoid valve (for solvent replenishment) 53 located in a path 833 to open and close the flow path and the solenoid valve (for solvent replenishment) 53 is connected to the main ink container 31. Using the above paths, the apparatus implements control of the viscosity of the ink 68A in the main ink container 31 under control of the main unit controller 7.

Next, descriptions are provided about an ink replenishment path 806 in the inkjet marking apparatus 600 of an embodiment of the invention disclosed herein. In Figure 2, the main unit 1 is equipped with an auxiliary ink container 32 which preserves ink 68C for replenishment. The auxiliary ink container 32 is connected with a path 806 in a portion of it filled with the ink 68C.

The path 806 is connected with a solenoid valve (for ink replenishment) 54 which opens and closes the path and the solenoid valve (for ink replenishment) 54 is connected with the pump (for supply) 34 which is installed in the path 802 and used to suction and pump the ink 68C via the joint path 901. The ink 68C in the auxiliary ink container 32 then goes through the nozzle 21 and, via the gutter 25, the path 811, the solenoid valve 50, and the pump 35, the ink is supplied to the main ink container 31 for replenishment.

Then, descriptions are provided about nozzle cleaning paths (paths 831 and 835) in the inkjet marking apparatus 600 of an embodiment of the invention disclosed herein. In Figure 2, the pump (for solvent) 37 located in the path 831 is connected with a path 835 via the branch path 922. The path 835 is connected with a solenoid valve (for nozzle cleaning) 55 to open and close the flow path.

The solenoid valve (for nozzle cleaning) 55 is in turn connected with a filter (for nozzle cleaning) 41 to remove foreign matter mixed in the solvent 69A. The nozzle cleaning paths are configured such that the filter (for nozzle cleaning) 41 is connected with the changeover valve 26 which is provided inside the print head 2 to control whether to deliver the solvent 69A for cleaning to the nozzle 21 via a path 821 passing through the cable (for the print head) 5.

Then, descriptions are provided about main unit circulation paths (paths 808 and 812) in the inkjet marking apparatus 600 of an embodiment of the invention disclosed herein. The path 802 is connected with a path 808 via a branch path 921. The path 808 is connected with a solenoid valve (for main unit circulation) 58 which opens and closes the path and the solenoid valve (for main unit circulation) 58 is connected with the pump (for circulation) 35 installed in the path 812 via the joint path 902.

Next, descriptions are provided about head cleaning paths (paths 831 and 837) in the inkjet marking apparatus 600 of an embodiment of the invention disclosed herein. In Figure 2, the pump (for solvent) 37 is connected with a path 837 via the branch path 922 and a solenoid valve (for head cleaning) 56 to open and close the flow path is located in the path 837. The solenoid valve (for head cleaning) 56 is connected with a filter (for head cleaning) 43 which removes foreign matters mixed in the solvent 69A.

Via a path 822 passing through the cable (for the head receptacle unit) 6, a filter (for head cleaning) 42 is connected with the filter (for head cleaning) 43 which is provided inside the head receptacle unit 3 to remove such foreign matters that are initially mixed within the path 837. The output side of the filter (for head cleaning) 43 is in turn connected with a cleaning nozzle 72 provided on the inner side of a cleaning tank 71 in the head receptacle unit 3. Here, a configuration is made such that space inside the cleaning tank 71 communicates with the collection container 4 installed beneath the tank.

The collection container 4 is provided to accumulate the solvent after cleaning is done with the cleaning solution (solvent) spouting from the cleaning nozzle 72 installed on the inner side of the cleaning tank 71. A float 74 is installed inside the collection container 4 in order to detect the liquid level of the solvent after cleaning. When the float 74 with a built-in magnet has reached a predetermined liquid level, a magnetic sensor A76 detects the liquid level and outputs, to the main unit controller, a signal that the cleaning solution in the collection container 4 has reached the predetermined liquid level (not depicted in Figure 2).

Then, descriptions are provided about an air supply path (a path 841) in the inkjet marking apparatus 600 of an embodiment of the invention disclosed herein. In Figure 2, the main unit 1 is equipped with a pump (for drying) 60 which is used to suction and pump air and the pump (for drying) 60 has an air suction port formed therein communicating with the interior of the main unit 1. The pump (for drying) 60 is connected with an air supply nozzle 73 provided on the inner side of the cleaning tank 71 in the head receptacle unit 3 via a path 841 passing through the cable (for the head receptacle unit) 6.

Then, descriptions are provided about an air suction path (a path 843) in the inkjet marking apparatus 600 of an embodiment of the invention disclosed herein. The cleaning tank 71 provided inside the head receptacle unit 3 is connected with an air pump (for suction) 61 which is provided inside the main unit 1 and used to suction and pump air via a path 843 passing through the cable (for the head receptacle unit) 6. This path is configured such that the pump (for suction) 61 is connected to the exhaust duct connection port 62 communicating with space outside the main unit 1.

Furthermore, the inkjet marking apparatus 600 is equipped with a thermal sensor D38 for checking internal temperature of the main unit 1, a thermal sensor A27 for checking internal temperature of the print head 2, a thermal sensor B80 for checking internal temperature of the head receptacle unit 3, and a thermal sensor C30 for use for control of warm-up by the heater 29.

### <Configuration of the main unit controller>

Next, explanations are provided about the configuration of the main unit controller 7 of the inkjet marking apparatus 600 according to an embodiment of the invention disclosed herein. Figure 3 depicts schematic configurations of the main unit controller 7 of the inkjet marking apparatus 600 of an embodiment of the invention disclosed herein and a printing mechanism section (the main unit 1 and the print head 2) and particularly illustrates how a variety of information flows in the main unit controller 7.

In Figure 3, the main unit controller 7 which exerts overall control of the inkjet marking apparatus 600 is equipped with a micro processing unit (hereinafter referred to as MPU) 301 as its principal component. A bus line 302 has a function of transmitting data, control signals, etc. between each of hardware components of the main unit controller. For example, the bus line 302 is used for input of data, detection signals, etc. required for computation of the MPU 301 from each hardware component and transmission of data signals, address signals, and control signals to each hardware component.

The main unit controller is also equipped with a read only memory (ROM) 306 to store programs for control and data which are necessary for the MPU 301 to operate and a rewritable memory (RAM) 307 to temporarily store data which becomes necessary when the MPU 301 is executing a program. The main unit controller is further equipped with the operating and display unit 8 through which an operator inputs what is to be printed, value settings, etc. and which displays data that has been input, what is to be printed, etc. As this operating and display unit 8, a touch-input display panel with transparent touch switches superimposed on the surface of a liquid crystal display screen is used here.

In addition, an operator action part (having the start button 18 and the stop button 19) of the head receptacle unit 3, as depicted in Figure 1, is used when an operator controls an operation regarding the head receptacle unit 3 near the head receptacle unit 3 but not through the operating and display unit 8. Then, the display 20 is used when an operator checks an operating status, an abnormality message, etc. with regard to the head receptacle unit 3 near the head receptacle unit 3, but not through the operating and display unit 8.

Furthermore, for an embodiment of the invention disclosed herein, one of its features is that the inkjet marking apparatus 600 can also be controlled from the operating and display unit of the external control appliances 100. Also, another one of the features is that these appliances are also equipped with an information display panel through which a variety of operating information of the inkjet marking apparatus 600 can be checked. The same display panel can be used as both the operating and display unit and the information display panel.

Therefore, it is enabled that maintenance management of the inkjet marking apparatus 600 is performed remotely by the external control appliances 100 via the antenna 97. In this case, the MPU 301 of the main controller 7 is configured to be able to communicate by radio with a network 14 via the bus line 302 and using the antenna 97. As noted above, the main unit controller 7 is equipped with a function as "transmission means" by which to transmit and receive a variety of information necessary for maintenance management to/from the external control appliances 100.

The print head 2 of the inkjet marking apparatus 600 is equipped with the nozzle 21 which spouts out the ink 68A pressurized and supplied from the ink container 31 while the ink turns into particles. The nozzle 21 spouts out the ink in a columnar form with its tip coming apart and the ink spouts as ink particles 68B. In addition, the print head 2 is equipped with the charging electrode 23 which is placed to surround the ink particles 68B and charges the ink particles 68B according to what is to be printed.

Furthermore, the print head 2 deflects flying ink particles 68B charged by the charging electrode 23 depending on their charge amount and makes the nk particles fly toward an object on which a print is made (not depicted). Then, printing is performed by letting the flying ink particles drip on the object on which a print is made. The deflecting electrode 24 of the print head 2 is comprised of a ground electrode 24B and a positive electrode 24A.

The print head 2 is also equipped with the gutter 25 which catches ink particles 68B not used for printing (non-used ink) and a charge sensor 48 which generates a phase detection signal depending on the charge amount of ink particles 68B taking a few amount of charge among the ink particles 68B caught by the gutter 25. Then, the main unit 1 is equipped with the pump (for collection) 35 to collect the ink (ink particles) caught by the gutter 25 into the main ink container 31 and the ink collection paths 811 to 812 connecting the gutter 25 and the main ink container 31.

Furthermore, the main unit controller 7 includes an excitation voltage generating circuit 331 which excites an electrostrictive element (not depicted) incorporated in the nozzle 21 in order to give regularity to timing at which an ink column spouted out from the nozzle 21 comes apart into ink particles 68B.

The main unit controller 7 also includes a printing-use charging signal generating circuit 342 and an phase search-use charging signal generating circuit 341 and includes a D/A converter 343 which converts a charging signal in a digital signal form which is output from these circuits to a voltage signal in an analog form and an amplifier circuit 344 which amplifies a voltage signal in an analog signal form which is output from the D/A converter 343 and generates a charging voltage to be applied to the charging electrode 23.

Note that, instead of a configuration provided with the printing-use charging signal generating circuit 342 and the phase search-use charging signal generating circuit 341, there may be an implementation through a charge amount control by the main unit controller using only the printing-use charging signal generating circuit 342. The inkjet marking apparatus 600 is also equipped with a deflection voltage generating circuit 332 which generates a deflection voltage to be applied to the deflecting electrode 24.

The inkjet marking apparatus 600 is also equipped with an amplifier circuit 353 which amplifies a phase detection signal in an analog signal form which is output from the charge sensor 48, a phase decision circuit 351 which takes input of an amplified phase detection signal and decides whether or not a charged quantity is acceptable, and an A/D converter 352 takes input of an amplified phase detection signal and performs A/D conversion.

Also in Figure 3, via the bus line 302, the MPU 301 of the main unit controller 7 is connected with and controls an liquid level detection circuit 313 for management of the liquid level of the main ink container 31, a pressure detection circuit 312 to detect whether the pressure of ink 68A supplied to the nozzle 21 is an appropriate value, a viscosity measurement circuit 311 for measuring whether the viscosity of ink 68A supplied to the nozzle 21 is an appropriate value for printing with the viscosity measuring instrument 45, a pump controlling circuit 314 to control the respective pumps 34 to 37 and 60 to 61 which suction and pump ink 68A, solvent 69A, and air and are deployed inside the main unit 1, a solenoid valve driving circuit 315 to control an open/close operation of the respective solenoid valves 49 to 50, 53 to 59 in the respective paths, a temperature detection circuit 316 to check whether temperature detected by the thermal sensor A27, thermal sensor B80, thermal sensor C30, and thermal sensor D38 falls in an appropriate range, and a heater controlling circuit 317 to implement a warm-up control based on a result of detection by the thermal sensor A27 and the thermal sensor C30.

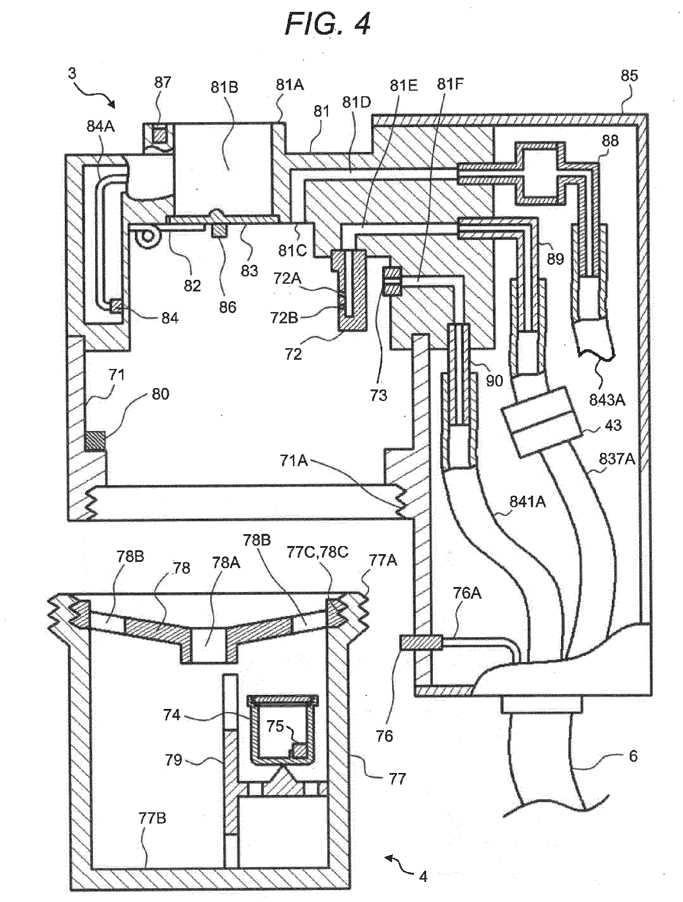

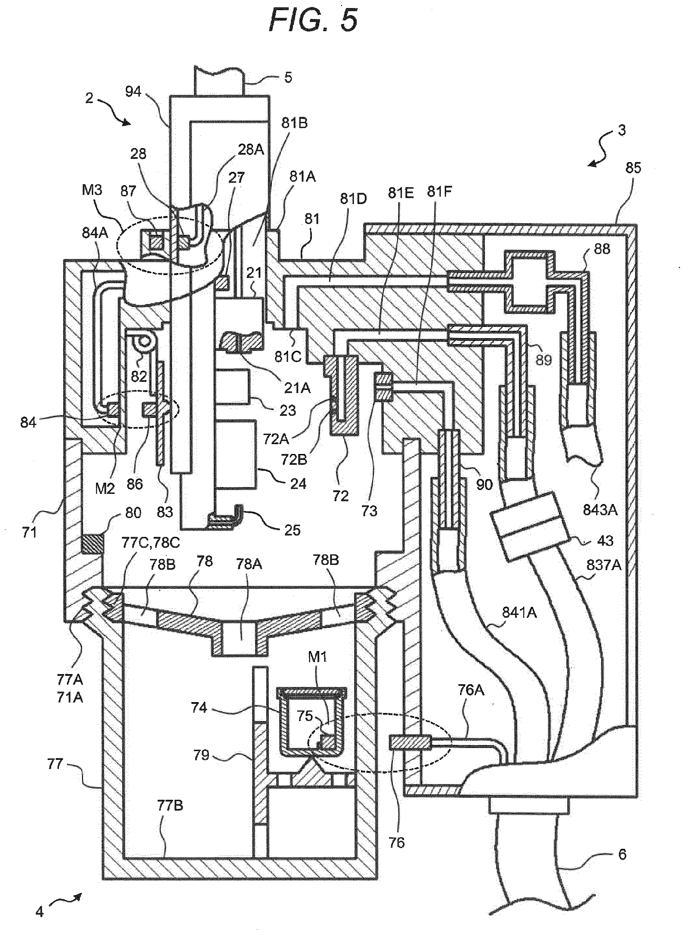

Via the bus line 302, the MPU 301 is also connected with and controls a collection container sensor detection circuit 322 to detect that the collection container 4 is set secured to the head receptacle unit 3, which is depicted in Figure 4 and Figure 5, and that the cleaning solution in the collection container 4 is not more than a predetermined quantity using a magnetic sensor A76 and a magnet A75, a print head detection circuit 323 to detect that the print head 2 is set secured in the head receptacle unit 3 using a magnetic sensor B84 and a magnet B86 within the head receptacle unit 3, and a head receptacle unit detection circuit 324 to detect that the print head 2 is set secured in the head receptacle unit 3 using a magnetic sensor C28 and a magnet C87 within the print head 2.

Additionally, a computer can be used as the main unit controller 7. Specifically, the main unit controller 7 can be made up of the MPU 301, the memories (306, 307) to store programs for operation of the MPU 301 and data and information necessary for operation, and drive components to cause the print head 2, the head receptacle unit 3, and the hardware components within the main unit to operate as instructed by the MPU 301. Detailed descriptions of the main unit controller 7 are omitted here.

### <Configuration of the head receptacle unit>

Next, explanations are provided about a detailed configuration of the head receptacle unit 3 of the inkjet marking apparatus 600 according to an embodiment of the invention disclosed herein with Figure 4 and Figure 5. Figure 4 depicts a configuration of the head receptacle unit 3 with the collection container 4 removed from the head receptacle unit. Figure 5 depicts a state when the collection container 4 and the print head 2 are set in place in the head receptacle unit 3.

To begin with, the configuration of the head receptacle unit 3 is described with Figure 4. In Figure 4, the head receptacle unit 3 is equipped with the cleaning tank 71 in which the print head 2 is set secured in place when head cleaning is performed, the head holding part 81A which is installed on the top of the cleaning tank 71 to set the print head 2 secured in the head receptacle unit 3, and a cleaning block 81 with a head insertion port 81B configured therein through which the print head 2 is inserted into the cleaning tank 71. The head receptacle unit is configured such that the collection container 4 to collect the cleaning solution used for a head cleaning process can be set beneath the cleaning tank 71.

A lid member 83 is assembled to the cleaning block 81 to prevent foreign matters such as dust from entering the interior of the cleaning tank 71 from the head insertion port 81B, which is an opening, when the print head 2 is not set secured in the head insertion port 81B. The lid member 83 is assembled to the cleaning block 81 via a lid hinge 82. The magnet B86 which is used at a time of detecting that the print head 2 has just been set secured in the head receptacle unit 3 is assembled to this lid member 83.

The magnetic sensor B84 is assembled to the cleaning block 81 to detect that the magnet B86 has come close to it within a certain distance, once the print head 2 has just been set secured in the head receptacle unit 3. To the cleaning block 81, the magnet C87 is also assembled which is used to detect that the print head 2 has just been set secured in the head receptacle unit 3.

To the cleaning block 81, furthermore, a cleaning nozzle 72 to discharge the solvent 69A for head cleaning toward the print head 2 and a supply nozzle 73 having an air discharge outlet to blow out air to dry the print head 2 wet with the solvent 69A after head cleaning are assembled by press-fitting.

This cleaning nozzle 72 has a liquid discharge opening A 72A formed therein to spout out the solvent 69A, targeting the nozzle 21 assembled to the print head 2, and a liquid discharge opening B 72B formed therein to spout out the solvent 69A, targeting the deflecting electrode 24. Then, the cleaning nozzle 72 is situated to be connected with a flow path B 81E formed in the cleaning block 81.

The air supply nozzle 73 has an air discharge opening formed therein to blow out air, targeting a gap between electrodes of the charging electrode 23 assembled to the print head 2. The air supply nozzle 73 is situated to be connected with a flow path C 81F formed in the cleaning block 81. Moreover, the cleaning block 81 has an opening 81C formed therein communicating with the interior of the cleaning tank 71 in which the print head 2 is inserted when head cleaning is performed and a flow path A 81D formed therein and connected with the opening 81C.

Then, under the cleaning block 81, the head receptacle unit 3 is equipped with the cleaning tank 71 to accommodate the print head 2 when head cleaning is performed. The cleaning tank 71 has side walls formed therein to prevent the solvent 69A spouted out from the cleaning nozzle 72 from scattering around and a coupling port 71A formed therein which is used when the collection container 4 is set in place. Also, the thermal sensor B80 is assembled to the inner side of the cleaning tank 71 to detect ambient temperature of the head receptacle unit 3 for use for diverse controls. Furthermore, the magnetic sensor A76 is assembled to the cleaning tank 71 to detect that the collection container 4 is installed in place in the head receptacle unit 3.

Moreover, the collection container 4 configured such that it can be set beneath the cleaning tank 71 is composed of a container 77 to accommodate the cleaning solution, a divider 78 installed to reduce scattering of the cleaning solution when the collection container 4 is carried, the float 74 with the magnet A75 assembled thereto, and a holder 79 which restrains movement of the float 74.

This collection container 4 can be separated from the head receptacle unit 3 by rotating the collection container 4 about 90° in a state in which the collection container 4 is set secured in the head receptacle unit 3, thereby disengaging, from the coupling port 71A of the head receptacle unit 3, its mating coupling part 77A of the collection container 4.

In this state, the magnetic sensor A76 assembled to the cleaning tank 71 is a certain distance or more (at which the magnetic sensor A76 no longer senses the magnet A75) away from the magnet A75 assembled inside the float 74. This state is transmitted to the main unit controller 7 via an electrical wire 76A. Thus, the main unit controller 7 can know that the collection container 4 has just been removed from the head receptacle unit 3.

The container 77 has a liquid reservoir 77B formed therein to accommodate the cleaning solution used for a head cleaning process, the fitting part 77A formed therein which is used to when securing the container to the cleaning tank 71, and an internal threaded part 77C formed therein to install the divider 78. The divider 78 has a liquid inflow opening 78A formed therein and provided to let the cleaning solution dropping from the cleaning tank 71 flow in the container 77 and a liquid outflow opening 78B formed therein and provided to let the cleaning solution flow out from the container 77 when the collection container 4 is inclined.

Then, a liquid joint 89 connected with the flow path B 81E is assembled in the cleaning block 81 and a tube 837A is connected to the liquid joint 89 by a method such as press-fitting. This tube 837A forms a part of the head cleaning path 837 and connection to the solvent container 33 inside the main unit 1 is made via the tube 837A.

Also, an air joint 90 connected with the flow path C 81F is assembled in the cleaning block 81 and a tube 841A is connected to the air joint 90 by a method such as press-fitting. This tube 843A forms a part of the path (for air supply) 843 and connection to the pump (for drying) 60 is made via the tube 843A.

Also, a suction joint 88 connected with the flow path A 81D is assembled in the cleaning block 81 and a tube 843A is connected to the suction joint 88 by a method such as press-fitting. This tube 841A forms a part of the path (for air suction) 841 and connection to the pump (for suction) 61 is made via the tube 841A.

In the head receptacle unit 3, then, the tube 837A, tube 841A, and tube 843A are covered with a cover 85 so that they are not exposed outside the head receptacle unit 3 and the cover 85 is fixated so as to sandwich the top of the cleaning block 81 and the bottom of the cleaning tank 71 within its top and bottom parts.

The cable (for the head receptacle unit) 6 is assembled to the bottom part of the cover 85 so as not to protrude outward and hinder other equipment for production. The cable (for the head receptacle unit) 6 is configured such that the tube 837A, tube 841A, and tube 843A pass through its interior and, in addition, an electrical wire 76A connected to the magnetic sensor A76, an electrical wire 84A connected to the magnetic sensor B84, an electrical wire connected to the thermal sensor B80, a harness (not depicted) for energizing the start button 18, the stop button 19, and the display 20, etc. pass through its interior and this cable makes the connection between the head receptacle unit 3 and the main unit 1.

Next, explanations are provided about a state in which the print head 2 and the collection container 4 are set secured in place in the head receptacle unit 3 using Figure 5. The lid member 83 of the head receptacle unit 3 is open with insertion of the print head 2 from which the protective cover 95 was removed in the head insertion port 81B. The print head 2 is placed in a state in which it was pushed in to a position where the nozzle 21, the charging electrode 23, the deflecting electrode 24, and the gutter 25 arrive within a space surrounded by the cleaning tank 71 and the cleaning block 81.

Then, the head receptacle unit 3 is configured such that the outside periphery of the head base 94 of the print head 2 mates neatly with the inside periphery of the opening of the head insertion port 81B to prevent the position of the print head 2 from shifting left, right, front, and back. Furthermore, as the print head 2 stands still at a position where a part of it abuts with the head holding part 81A formed in the cleaning block 81, the position at which the print head 2 has just been set secured in the head receptacle unit 3 becomes stable.

In addition, the magnetic sensor C28 and the thermal sensor A27 are assembled in the print head 2 in an embodiment of the invention disclosed herein. An electrical wire 28A connected to the magnetic sensor C28 and an electrical wire 27A connected to the thermal sensor A27 are connected to the main unit controller 7 installed in the main unit 1 through the interior of the cable (for the print head) 5.

In the state in which the print head 2 is set secured in the head receptacle unit 3, as the lid member 83 is opened by the print head 2, the magnet B86 assembled to the lid member 83 also moves together and the magnet B86 and the magnetic sensor B84 come close to each other within a certain distance, as marked by a dotted circle (M2). Then, the head receptacle unit 3 can know that the print head 2 has just been placed in the state in which it is set secured in the head receptacle unit 3.

In addition, in the state in which the print head 2 is set secured in the head receptacle unit 3, the magnet C87 assembled in the cleaning block 81 and the magnetic sensor C28 assembled in the print head 2 come close to each other within a certain distance, as marked by a dotted circle (M3). Then, the print head 2 can also know that the print head 2 has just been placed in the state in which it is set secured in the head receptacle unit 3.

In this way, checking as to whether the print head 2 is placed in the state in which it is set secured in the head receptacle unit 3 is performed with two sensors, thereby preventing false detection due to, inter alia, failure of a component.

In addition, in a state in which the collection container 4 is set secured to the head receptacle unit 3, the magnet A75 assembled in the float 74 in the collection container 4 and the magnetic sensor A76 assembled to the cleaning tank 71 of the head receptacle unit come close to each other within a certain distance, as marked by a dotted circle (M1). The magnetic sensor A76 detects this state and, thereby, the main unit controller 7 can know that the collection container 4 has just been set secured to the head receptacle unit 3. This detection enables prevention of an erroneous operation such as starting the head cleaning process without setting the collection container 4 secured in place.

Note that, although the cleaning nozzle is provided in the head receptacle unit in the configuration according to an embodiment of the invention disclosed herein, an alternative configuration such that a cleaning nozzle having the same function as above is provided in a part of the print head 2 may be adopted; an appropriate configuration, as necessary, may be adopted.

As described so far, an inkjet marking apparatus of an embodiment of the invention disclosed herein is equipped with a print head including a nozzle which spouts out supplied ink, while the ink turns into particles, a charging electrode which gives charge to ink particles spouted out from the nozzle, a deflecting electrode which deflects the ink particles charged by the charging electrode, and a gutter which collects non-used ink not used for printing; a main unit equipped with an ink supply path to supply ink in an ink container to the print head, an ink collection path to collect ink not used for printing into the ink container, a solvent supply path to supply a solvent in a solvent container to the ink container, and flow rate regulators which regulate ink and solvent flows in these respective paths; a main unit controller which controls operation of the flow rate regulators in the main unit and the print head; and a head receptacle unit including a head holding part to set and hold the print head secured in place and a print head detector which detects that the print head has been set secured in place.

Next, explanations are provided about the ink circulation process and the printing process in the inkjet marking apparatus 600, as the processes to be performed by an embodiment of the invention disclosed herein. Additionally, in case abnormality should occur in the ink head during the run of the ink circulation process or the printing process, the head cleaning process is to be run; this process is also explained together. Here, pre-requirement for these processes is that the print head 2 is set secured in the head receptacle unit 3.

### <Explanation on the ink circulation process>

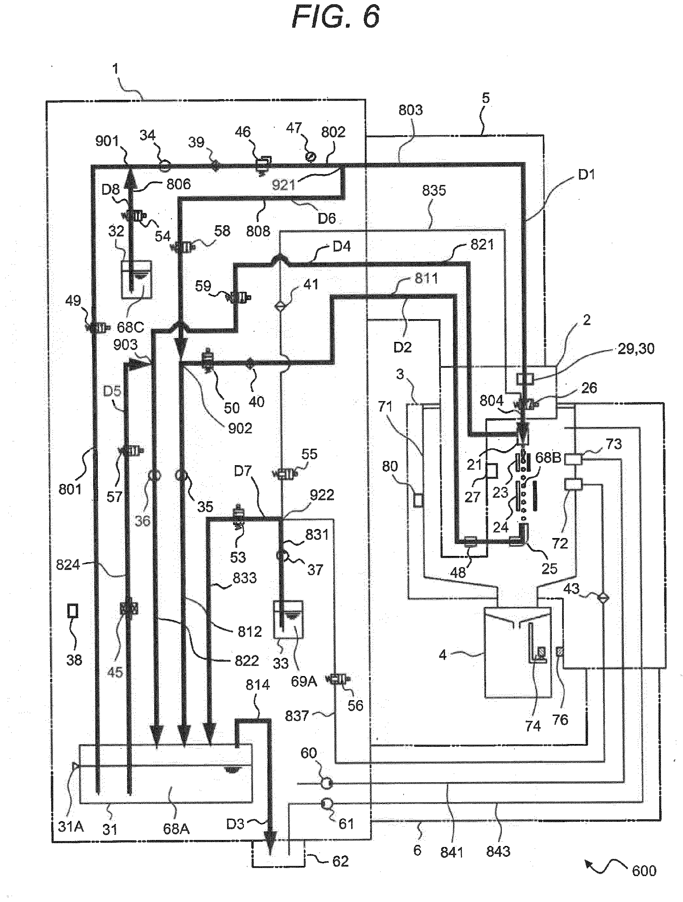

Explanations are provided about the flow of ink when the ink circulation process is performed in the inkjet marking apparatus 600 using Figure 6.

As for the ink supply path (formed of the paths 801 to 804) in Figure 6, when the solenoid valve (for supply) 49 is energized to open the flow path and the changeover valve 26 is energized, a state of connection of the ink supply path with the nozzle 21 is established. By activating the pump (for supply) 34, ink 68A contained in the main ink container 31 of the main unit 1 is supplied to the nozzle 21 of the print head 2 and spouted out from the nozzle 21 as ink particles 68A, as marked by a bold arrow D1.

In addition, as for the ink collection path 811 to 812 in Figure 6, when the solenoid valve (for collection) 50 is energized to open the flow path and, by activating the pump (for collection) 35, ink particles 68B and air around the print head 2 are sucked in through the gutter 25 and delivered to the main ink container 31 of the main unit 1 by suction and pumping force, as marked by a bold arrow D2.

In the ink collection path 811 to 812, as the ink 68A and air flow in a state of gas-liquid mixture, the air is mixed with a solvent component of the ink 68A and turns into a solvent gas which flows into the main ink container 31. After flowing into the main ink container 31, the ink becomes deposited in a lower part of the container and the air turned into the solvent gas is discharged outside the main unit 1 as the solvent gas, as marked by a bold arrow D3.

In addition, because the solvent component of the ink 68A is discharged as the solvent gas outside the apparatus, the proportion of the solvent component of the ink 68A decreases with longer operation time of the apparatus and this could result in that density of the ink 68A becomes thicker. Conversely, shorter operation time of the apparatus could result in that density of the ink 68A becomes lower by the solvent 69A flowing into the main ink container 31 during, inter alia, a process of cleaning the circulation path.

For this reason, in the paths (for viscosity measurement) 824 and 822, when the solenoid valve (for viscosity measurement) 57 is energized to open the flow path and, by activating the pump (for circulation) 36, ink 68A in the main ink container 31 is delivered to the viscosity measuring instrument 45, as marked by a bold arrow D5; thus, viscosity of the ink 68A (which is converted to density) is measured periodically.

A detection value of the thus measured viscosity is input to the main unit controller 7. As a result, the main unit controller 7 implements control to supply ink 68C in the auxiliary ink container 32 to the main ink container 31 for replenishment, if density of the ink 68A is thinner, and supply the solvent 69A in the solvent container 33 to the main ink container 31 for replenishment, if density of the ink 68A is thicker, as marked by a bold arrow D7. In this way, the inkjet marking apparatus 600 controls viscosity of the ink 68A so as to fall within a control value range.

As for the ink circulation path 821 to 822, as marked by a bold arrow D4, in a state in which ink 68A is supplied from the main ink container 31 to the nozzle 21, when solenoid valve (for circulation) 59 is energized to open the flow path and, by activating the pump (for circulation) 36, at least some of the ink 68A supplied to the nozzle 21 is sucked in by the pump (for circulation) 36 and returns to the main ink container 31 along the flow marked by the bold arrow D2; in this. way, the ink circulation path circulates the ink 68A.

In addition, before energizing the changeover valve 26, by energizing the solenoid valve (for main unit circulation) 58 to open the flow path and activating the pump (for circulation) 36, it is possible to circulate the ink 68A through the path (for main unit circulation) 808 as well, as marked by a bold arrow D6.

By thus circulating ink through most of the paths, the inkjet marking apparatus 600 prevents that ink in the paths becomes dry and causes sticking of the solenoid valves or the like. Additionally, the inkjet marking apparatus 600 performs an abnormality check even during the ink circulation process in such a way that the charge sensor 48 checks the charge amount of ink particles 68B spouted out from the nozzle 21 and charged by applying voltage to the ink particles by the charging electrode 23.

As for the ink replenishment path 806 in Figure 6, when the solenoid valve (for replenishment) 54 is energized to open the flow path and the changeover valve 26 is energized, a state of connection of the ink replenishment path with the nozzle 21 is established. By activating the pump (for supply) 34, ink 68C contained in the auxiliary ink container 32 of the main unit 1 flows and merges in the flow of the arrow D1, as marked by a bold arrow D8, and is supplied to the nozzle 21 of the print head 2. Then,the ink is delivered via the ink collection path 811 to 812 marked by the arrow D2 to the main ink container 31 for replenishment.

This ink circulation process is to continue until a predetermined certain time has elapsed or until the liquid level sensor 31A of the main ink container 31 determines that the liquid volume of the ink 68A has decreased by a certain amount and the liquid levelhas fallen below the liquid level sensor 31A in consequence of discharging exhaust gas, which is an optional choice.

### <Explanation on the printing process>

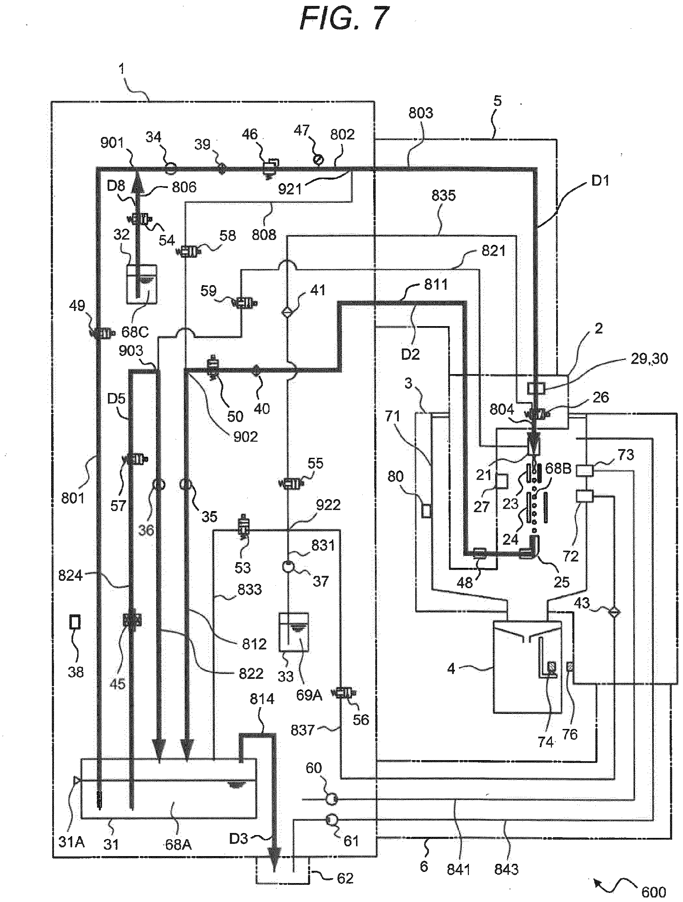

Explanations are provided about the flow of ink when the printing process is performed in the inkjet marking apparatus 600 using Figure 7.

As for the ink supply path (formed of the paths 801 to 804) in Figure 7, when the solenoid valve (for supply) 49 is energized to open the flow path and the changeover valve 26 is energized, a state of connection of the ink supply path with the nozzle 21 is established. By activating the pump (for supply) 34, ink 68A contained in the main ink container 31 of the main unit 1 is supplied to the nozzle 21 of the print head 2 and spouted out from the nozzle 21 as ink particles 68A, as marked by a bold arrow D1.

In addition, as for the ink collection path 811 to 812 in Figure 7, when the solenoid valve (for collection) 50 is energized to open the flow path and, by activating the pump (for collection) 35, ink particles 68B and air around the print head 2 are sucked in through the gutter 25 and delivered to the main ink container 31 of the main unit 1 by suction and pumping force, as marked by a bold arrow D2.

In the ink collection path 811 to 812, as the ink 68A and air flow in a state of gas-liquid mixture, a solvent component of the ink 68A melts in the air to turn the air into a solvent gas which flows into the main ink container 31. After flowing into the main ink container 31, the ink becomes deposited in a lower part of the container and the air turned into the solvent gas is discharged outside the main unit 1 as the solvent gas, as marked by a bold arrow D3.

In addition, as for the viscosity measurement paths 824 and 822, when the solenoid valve (for viscosity measurement) 57 is energized to open the flow path and, by activating the pump (for circulation) 36, ink 68A contained in the main ink container 31 of the main unit 1 is allowed to pass through the viscosity measuring instrument 45, the solenoid valve (for viscosity measurement) 57, and the pump (for circulation) 36 and return to the main ink container 31, as marked by the bold arrow D5; in this way, the viscosity measurement paths circulate the ink 68A.

By thus letting the ink 68A pass through the viscosity measuring instrument 45, ink viscosity is measured. Then, the main unit controller 7 calculates-ink density based on a relationship between temperature and viscosity with respect to each ink type recorded therein.

In addition, in the inkjet marking apparatus 600, because the solvent component of the ink 68A is discharged outside the apparatus as the solvent gas as marked by the bold line D3, the proportion of the solvent component of the ink 68A decreases with longer operation time of the apparatus, resulting in that density of the ink 68A becomes thicker. Because the liquid volume of the ink 68A in the main ink container 31 decreases as much as the amount of the solvent component discharged outside the apparatus, replenishment with the liquid volume corresponding to that amount is made from the solvent 69A in the solvent container 33.

In addition, ink 68C contained in the auxiliary ink container 32 of the main unit 1 flows and merges in the flow of the arrow D1, as marked by the bold arrow D8, and is supplied to the nozzle 21 of the print head 2. Then, the ink is delivered via the ink collection path 811 to 812 marked by the arrow D2 to the main ink container 31 for replenishment.

### <Explanation on the head cleaning process>

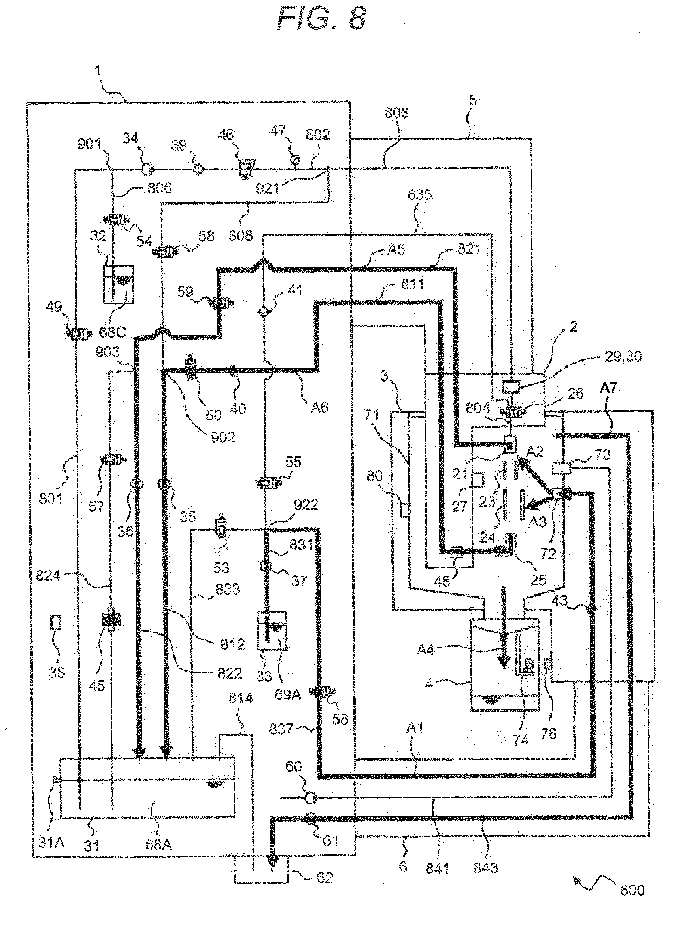

Next, explanations are provided about the flow of ink when the head cleaning process is performed in the inkjet marking apparatus 600 using Figure 8.

In regard to Figure 8, the inkjet marking apparatus 600 is placed in a state in which the print head 2 is set secured in the head receptacle unit 3 for print head cleaning.

As for the head cleaning path (formed of the path 831 and the path 837), when the solenoid valve (for head cleaning) 56 is energized to open the flow path and, by activating the pump (for solvent) 37, the solvent which is the cleaning solution is supplied to the head receptacle unit 3, as marked by a bold arrow A1. That is, the solvent 69A contained in the solvent container 33 of the main unit 1 is allowed to be supplied to the cleaning nozzle 72 assembled on the inner side of the cleaning tank 71 of the head receptacle unit 3.

The cleaning nozzle 72 spouts out (discharges) the solvent 69A toward the print head to clean the print head 2. Specifically, the cleaning nozzle 72 spouts out the solvent 69A supplied to it in a direction marked by an arrow A2 (the direction in which it spouts out the solvent 69A, targeting the nozzle 21 from the liquid discharge opening A 72A) and a direction marked by an arrow A3 (the direction in which it spouts out the solvent 69A, targeting the deflecting electrode 24 from the liquid discharge opening B 72B) and sprays the solvent 69A on the nozzle 21, the deflecting electrode 24, and other components assembled in the print head 2; thereby, this can wash away dirt due to deposited ink 68A during operation of the inkjet marking apparatus 600 and when maintenance is performed.

After cleaning the nozzle 21, the deflecting electrode 24, and other components assembled in the print head 2, the solvent 69A drops and flows downward by gravity. In the state in which the print head 2 is set secured in the head receptacle unit 3, the gutter 25 located below the charging electrode 23 and the deflecting electrode 24 can be cleaned with the solvent 69A.

Then, in the head cleaning process, after cleaning the components including the nozzle 21, the charging electrode 23, the deflecting electrode 24, the gutter 25, etc. located in the print head 2, the solvent 69A drops in a direction marked by an arrow A4, flows into the collection container 4 installed beneath the head receptacle unit 3, and is accumulated as a liquid 70A in the liquid reservoir 77B.

In addition, as for the ink circulation path (821 to 822), when the solenoid valve (for circulation) 59 is energized to open the flow path and, by activating the pump (for circulation) 36, some of the solvent 69A having struck the nozzle 21 is sucked in through the nozzle 21 and collected into the main ink container 31 of the main unit 1, as marked by a bold arrow A5. Thus, the interior of the nozzle 21 and the ink circulation path 821 to 822 can also be cleaned with the solvent 69A in the head cleaning process.

Furthermore, as for the ink collection path (811 to 812), when the solenoid valve (for collection) 50 is energized to open the flow path and, by activating the pump (for collection) 35, some of the solvent 69A having struck the gutter 25 is sucked in through the gutter 25 and is collected into the main ink container 31 of the main unit 1, as marked by a bold arrow A6. Thus, the interior of the gutter 25 and the ink collection path 811 to 812 can also be cleaned with the solvent 69A in the head cleaning process.

Then, air around the nozzle 21 and the gutter 25 is also sucked in together with the solvent 69A. The air sucked at this time turns into a solvent vapor, as it is mixed with a vaporized solvent 69A, inside the ink circulation path 821 to 822 and the ink collection path 811 to 812. After flowing into the main ink container 31, this solvent vapor is discharged to the exhaust duct connection port 62 communicating with space outside the main unit 1 via the path 814.

As for the air suction path (the path 843), by activating the pump (for suction) 61, a solvent vapor generated inside the cleaning tank 71 of the head receptacle unit 3 is sucked in through the opening 81C and discharged to the exhaust duct connection port 62 communicating with space outside the main unit 1, as marked by a bold arrow A7.

The inkjet marking apparatus 600 is configured such that the solvent vapor discharged from the main ink container 31 and the solvent vapordischarged from the head receptacle unit 3 are discharged together from the exhaust duct connection port 62. The exhaust duct connection port 62 is at a distant location away from the operating and display unit 8 of the main unit 1; for example, it is assembled to the rear surface or bottom surface of the main unit 1.

The ink circulation process, the printing process, and the head cleaning process explained above are exemplary and alternative ink circulation process, printing process, and head cleaning process may be performed in a variant of the apparatus. The point is that the apparatus should be equipped with functionality to run the ink circulation process, the printing process, and, as necessary, the head cleaning process.

### <Explanation on the ink circulation process and the printing process in an embodiment of the invention disclosed herein>

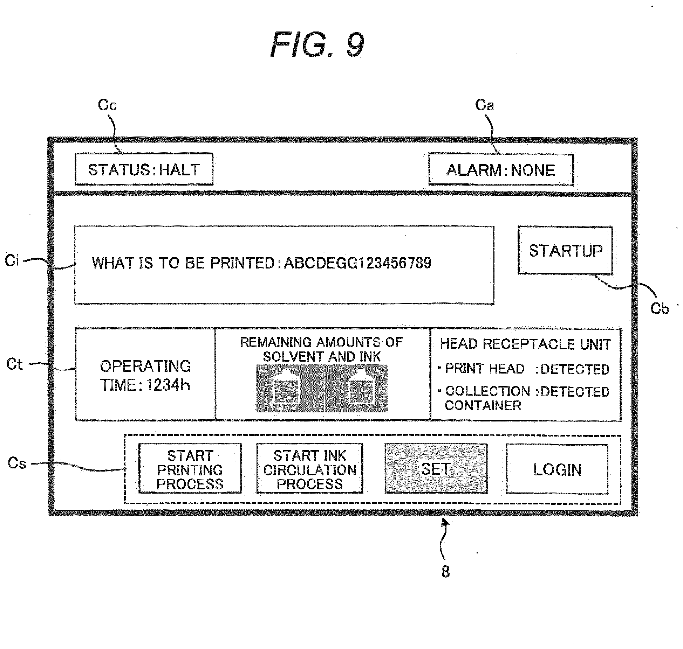

Next, explanations are provided about details of an embodiment of the invention disclosed herein in which the ink circulation process and the printing process are run automatically. Figure 9 depicts a home screen displayed on the operating and display unit 8 of the inkjet marking apparatus.

On the home screen of Figure 9, the current status (Cc) of the inkjet marking apparatus is displayed; status that is now displayed is "halt", i.e., the apparatus does not perform the printing operation now. Also, as for the alarm (Ca) to indicate an abnormal state, "none" is displayed which indicates no abnormality.

In addition, in a central area of the screen, there is provided an entry field for what is to be printed (Ci) for setting what is to be printed; optional characters and symbols can be entered here. There is provided a Startup button (Cb) on the right side of the entry field for what is to be printed (Ci); a process selected can be started up. In a status display field (Ct) under the entry field for what is to be printed (Ci), the screen displays "operating time", "remaining amounts of solvent and ink", and "status as to whether or not the print head and the collection container are set secured in place in the head receptacle unit". When "detected" is displayed for both in the status as to whether or not the print head and the collection container are set secured in place in the head receptacle unit, the ink circulation process and the printing process are to be run. Furthermore, in a function display field at the bottom, function buttons are displayed including "Start printing process", "Start ink circulation process", "Set", "Login", etc.

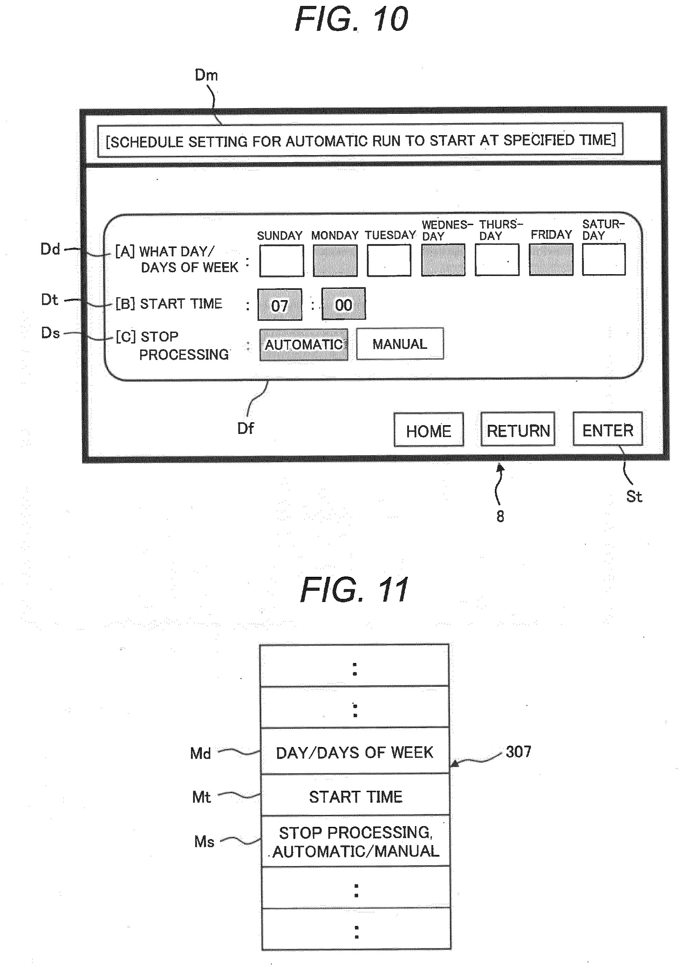

Then, the "Set" function button, when chosen, allows an operator to specify condition settings for the ink circulation process and the printing process. Subsequently, a setup screen (see Figure 10) to interact with to specify condition settings for the ink circulation process and the printing process is displayed on the operating and display unit 8.

In Figure 10, on a display screen, there is presented the name of a processing mode (Dm) at the top of the screen; "schedule setting for automatic run" is displayed in an embodiment of the invention disclosed herein. This enables it to confirm that what is to be set now is a schedule for the ink circulation process or the printing process. By how to stop ink jetting, a distinction is made between the ink circulation process and the printing process, as will be described later. In the case of the ink circulation process, ink jetting is automatically stopped. In the case of the printing process, ink jetting is manually stopped by an operator.

In addition, in a middle area of the screen, a setting field (Df) is displayed for an operator to set options to run the ink circulation process and the printing process. Within the setting field (Df), the following items are set: what day/days of the week (Dd), start time (Dt), and stop processing, automatic/manual (Ds) which is how to stop ink jetting. This field allows an operator to set a specific time to start the ink circulation process or the printing process.

In a row of "[A] what day/days of the week (Dd)" for setting a day/days of the week on which to carry out the ink circulation process or the printing process, the days of one week from "Sunday" to "Saturday" are presented in cells. By touching (tapping) one of these view cells of "what day/days of the week", an operator can choose a day of the week on which to carry out the ink circulation process or the printing process. In the current display, multiple days, Monday, Wednesday, and Friday are chosen. This provides more choices of when the inkjet marking apparatus runs the ink circulation process or the printing process and can improve usability.

Then, in a row of "[B] start time (Dt)" for setting time to start the ink circulation process or the printing process, cells are presented for an operator to enter time that is displayed in 24-hour notation. By entering a specific time in the "start time" view cells, an operator can choose the time when the apparatus starts to run the ink circulation process or the printing process. In the current display, seven o'clock in the morning is chosen.

Then, in a row of "[C] stop processing, automatic/manual (Ds)", cells are presented for an operator to choose an ink circulation process mode in which ink jetting is automatically stopped or a printing process mode in which ink jetting is manually stopped by an operator. By touching either of these "automatic" and "manual" view cells, an operator can set whether to perform automatic stop processing of the ink circulation process or to perform manual stop processing of the printing process. In the current display, the "automatic" cell is chosen so that the ink circulation process will be stopped automatically.

Then, once the items, what day/days of the week (Dd), start time (Dt), and stop processing, automatic/manual (Ds) have been determined, information of these items is stored as settings information by touching the Enter button (St). In other words, these pieces of information are stored into the RAM 307 of the main unit controller 7 when the settings are done through the operating and display unit 8 of the inkjet marking apparatus 600.

Figure 11 depicts memory blocks of the RAM 307. As a result of the setting processing which is depicted in Figure 10, the settings of a day/days of the week, start time, and stop processing, automatic/manual are stored in a memory block (Md), a memory block (Mt), and a memory block (Ms), respectively. Figure 11 depicts the RAM 307 by way of example; alternatively, memory devices which are able to retain data, such as a RAM with power backup and an E²ROM typified by a flash ROM, can also be used. Settings information is caused to be stored in a flash ROM in an embodiment of the invention disclosed herein and, therefore, storage is assumed as a flash ROM in explanations that follow.

Even when the inkjet marking apparatus has been powered off for some reason, use of such a memory device enables it to read stored settings information once power has been turned on again and restart the ink circulation process or the printing process. These pieces of settings information stored are used in processing of a control flow which is described subsequently.

### <Explanation on a decision to run the ink circulation process or the printing process>

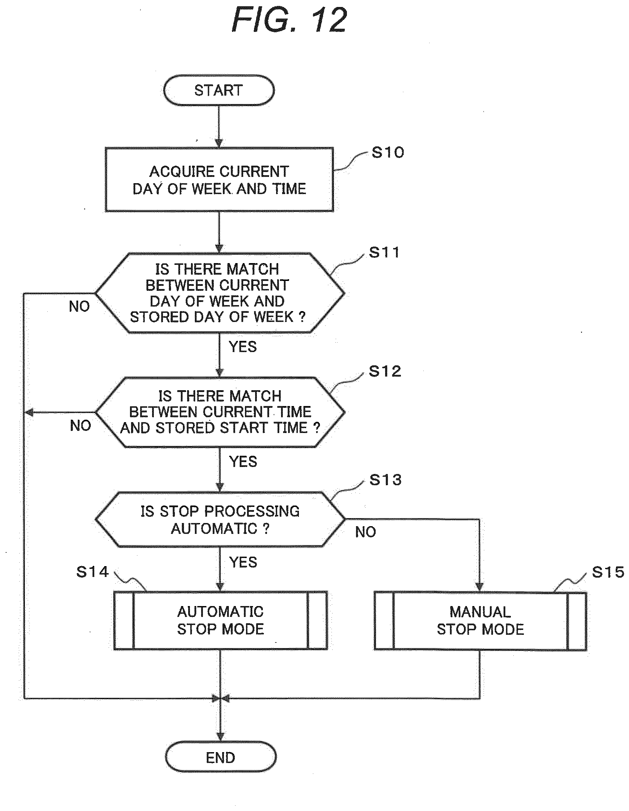

Figure 12 depicts a processing flow for making a decision to run the ink circulation process or the printing process by conditions that have been set as in Figure 10. This processing flow is activated at a predetermined time interval and is, for example, activated through the use of a compare match interrupt of an internal timer among others.

### <<Step S10>>

Step S10 is to acquire the current day of the week and time. They can be acquired by reading the day of the week and time preset beforehand in the main unit controller 7. Day of the week and time can be updated using an internal timer, as is well known. Alternatively, they can be acquired from the cloud server 209 through communication. Upon acquiring the current day of the week and time, a transition is made to a next step S11.

### <<Step S11>>

Step S11 is to execute a decision as to whether or not there is a match between a day of the week stored in the flash ROM and the day of the week acquired at step S10. If a match is decided (decided YES), a transition is made to a next step S12. Otherwise, if a mismatch is decided (decided NO), the processing jumps to the end and terminates, then waits for next timing of activation.

### <<Step S12>>

Step S12 is to execute a decision as to whether or not there is a match between a start time stored in the flash ROM and the time acquired at step S10. If a match is decided (decided YES), a transition is made to a next step S13. Otherwise, if a mismatch is decided (decided NO), the processing jumps to the end and terminates, then waits for next timing of activation.

### <<Step S13>>

Step S13 is to execute a decision for stopping ink jetting automatically or stopping it manually in the process of jetting ink. If a decision is made to stop ink jetting automatically (decided YES), a transition is made to step S14. Otherwise, if a decision is made to stop ink jetting manually (decided NO), a transition is made to step S15.

### <<Step S14>>

Step 14 is to run the ink circulation process with a function to stop ink jetting automatically. This process will be described later. Upon completion of this ink circulation process, the processing ends, then waits for next timing of activation.

### <<Step S15>>

Step S15 is to run the printing process with a function to stop ink jetting manually. This process will also be described later. Upon completion of this ink circulation process and the printing process, the processing ends, then waits for next timing of activation.

### <Explanation on the processing flow of the ink circulation process>

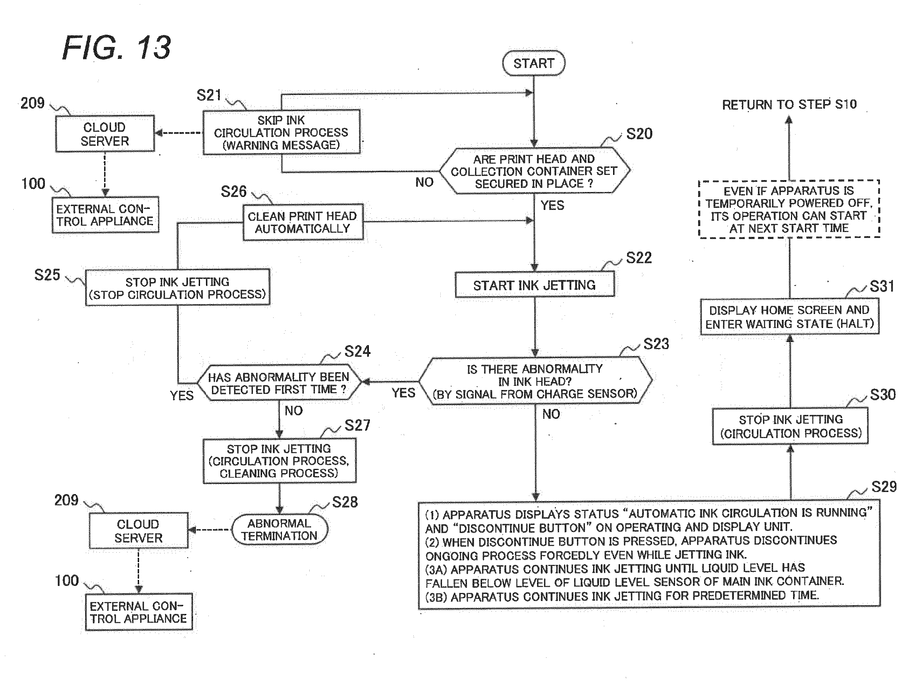

Next, explanations are provided about a processing flow of the ink circulation process with a function to stop ink jetting automatically (step S14) in Figure 12, using Figure 13.

### <<Step S20>>

Because a decision is made to start the ink circulation process, as decided in the processing flow of Figure 12, step S20 is to make a decision as to whether or not the print head 2 and the collection container 4 are set secured in place in the head receptacle unit 3. If a decision is made the print head 2 and/or the collection container 4 are not set secured in place in the head receptacle unit 3 (decided NO), a transition is made to a step S21. Otherwise, if a decision is made that the print head 2 and the collection container 4 are set secured in place in the head receptacle unit 3 (decided YES), a transition is made to a step S22.

### <<Step S21>>

Step S21 is to skip the execution of the ink circulation process without running it because the print head 2 and/or the collection container 4 are not set secured in place in the head receptacle unit 3. A return is made to step S20 again and the same processing is to be iterated.

In the step S21, the apparatus displays an indication that the print head 2 and/or the collection container 4 are not set secured in place in the head receptacle unit 3 on the operating and display unit 8 and can prompt an operator to set the print head 2 and/or the collection container 4 secured in place in the head receptacle unit 3.

Likewise, the apparatus sends information that the print head 2 and/or the collection container 4 are not set secured in place in the head receptacle unit 3 to the cloud server 209 and, furthermore, the information can be sent to the external control appliances 100 through means such as e-mail. Thereby, it is possible to prompt an operator in a remote place to set the print head 2 and/or the collection container 4 secured in place in the head receptacle unit 3.

### <<Step S22>>

Step S22 is to run the ink circulation process, while jetting ink to prevent sticking of the solenoid valves or the like in the constituent paths in the inkjet marking apparatus, since the print head 2 and the collection container 4 are set secured in place in the head receptacle unit 3. Operation regarding this ink circulation process is already described with Figure 6 and, therefore, its detailed description is omitted. When jetting ink is performed by the ink circulation process, a transition is made to step S23.

### <<Step S23>>

Step S23 is to execute an abnormality decision in the ink circulation process. This abnormality decision is made by a sensor signal from the charge sensor 48 depicted in Figure 3. As in Figure 3, the charge sensor 48 checks the charge amount of ink particles 68B spouted out from the nozzle 21 of the print head 2 and charged by applying voltage to the ink particles by the charging electrode 23 and, thereby, an abnormality check can be performed during the ink circulation process.

If a decision is made that no abnormality is detected in this control step, the ink circulation process is continued while keeping on ink jetting. Otherwise, a decision is made that abnormality is detected, a transition is made to step S24.

### <<Step S24>>

Step S24 is to decide how many times abnormality detected at step S23 has occurred. If a decision is made that abnormality has occurred first time (decided YES), a transition is made to step S25. Otherwise, if a decision is made that abnormality has occurred twice or more, a transition is made to step S27. This means that, when abnormality has occurred twice or more, a recovery operation by steps S25 and S26 which will be described later becomes ineffective and it is impossible to clear the abnormal state.

### <<Step S25>>

Step S25 is to stop ink jetting being performed now and stop operation of the ink circulation process. This is a pre-step for the process of cleaning the print head 2 to be run subsequently. This is because it is required to clean the print head 2, since it is decided at step S23 that abnormality has occurred. Upon stopping the ink circulation process, a transition is made to step S26.

### <<Step S26>>

Step S26 is to run the head cleaning process for the print head 2. This is intended to clear the abnormal state by cleaning the print head 2, since it is decided at step S23 that abnormality has occurred, as above.

Typically, abnormality concerning charging of ink particles is often attributed to contamination by ink deposited to the nozzle 21 and the charging electrode 23 in the print head 2. For this reason, the head cleaning process is run in the step S26 to clean the print head 2. Operation regarding this head cleaning process is already described with Figure 8 and, therefore, its detailed description is omitted.

Upon completion of cleaning by jetting ink in the head cleaning process, ink jetting is restarted in the step S22 (here, the ink circulation process is restarted). Then, a transition is made to step S23 in this state. If the abnormal state is cleared, as decided at the step S23, a transmission is made to step S29; if the abnormal state is not cleared, a transition is made to the step S24 again.

The step S24 decides that this abnormality has been occurred twice and, therefore, a transition is made to step S27, as the head cleaning process in the step S26 is judged ineffective.

### <<Step S27>>

Step S27 is to stop ink jetting, since abnormality of the print head 2 is not cleared. This is done the same for ink jetting for the ink circulation process and ink jetting for the head cleaning process. Upon stopping ink jetting, a transition is made to step S28.

### <<Step S28>>

Step S28 is to terminate the processing as abnormal termination, since it is decided that the ink circulation process cannot be continued because of abnormality of the print head. At the same time, a message that "ink circulation process terminated due to abnormality occurred" is displayed on the operating and display unit 8. This message can prompt an operator to make a detailed inspection of the print head 2.

Likewise, the apparatus sends, to the cloud server 209, information of abnormality occurring in the print head 2 and, furthermore, the information can be sent to the external control appliances 100 through means such as e-mail. Thereby, it is possible to prompt an operator in a remote place to make a detailed inspection of the print head 2.

### <<Step S29>>

Returning to the step S23, if a decision is made that the print head 2 is free of abnormality, the ink circulation process is continued, while keeping on ink jetting. Then, in this step S29, while keeping on ink jetting, the apparatus is to execute processing operations as follows.

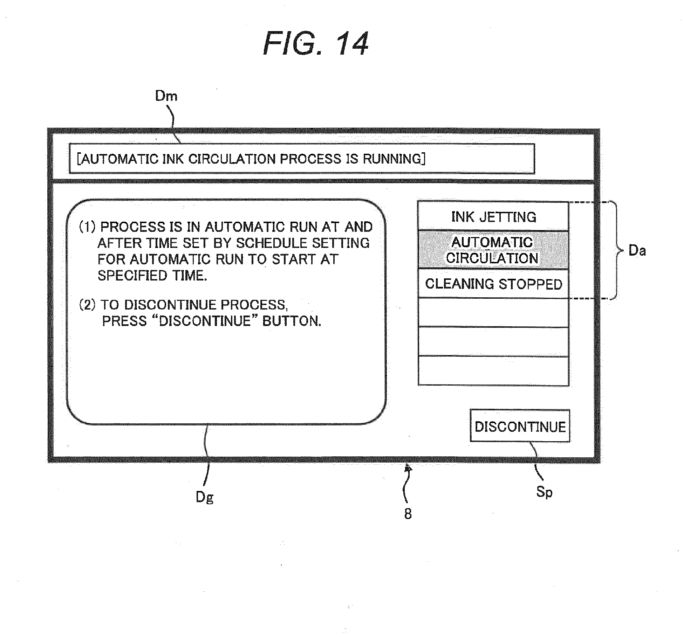

First, (1) the apparatus displays the status "automatic ink circulation process is running" and "Discontinue button" on the operating and display unit 8. An example of this display is depicted in Figure 14. In Figure 14, on the operating and display unit 8, a message view box (Dg) is displayed; what is displayed in this box is such as the current status "automatic ink circulation is running" and a message "to discontinue the process, press the Discontinue button". On a side of the box, in addition, view cells (Da) informing of automatic process run. Furthermore, a view cell indicating cleaning stopped is also displayed. The Discontinue button (Sp) is also displayed. Currently, the ink circulation process is run automatically and, therefore, automatic circulation is displayed.

In addition, when the Discontinue button (Sp) of (2) is pressed by an operator when this display screen is displayed, the ink circulation process is discontinued forcedly and ink jetting is stopped temporarily.

In addition, unless the Discontinue button is pressed, (3a) the apparatus will execute processing to automatically stop the ink circulation process. This automatic stop is executed upon elapse of a predetermine time until the liquid level has fallen below the liquid level sensor 31A of the main ink container 31. In other words, when the liquid level sensor 31A of the main ink container 31 determines that the liquid volume of ink 68A has decreased down to the level of the liquid level sensor 31A, the ongoing process is automatically stopped. Aside from this, furthermore, (3b) the apparatus will execute processing to automatically stop the ink circulation process upon elapse of a predetermined time after the point of time when ink jetting is started in the step S22.

Note that an amount of time before automatic stop may be set in ways according to (3a) or (3b) or a combination of (3a) and (3b). For example, in one way, a choice is that the process can be stopped at early timing; conversely, in another way, a choice is that the process can be stopped at late timing. Then, during continued execution of the step S29, a transition is made to step S30.

### <<Step S30>>

Step S30 is to terminate the ink circulation process and stop ink jetting upon elapse of a predetermined time before automatic stop during execution of the processing of the step S29. Upon stopping ink jetting, a transition is made to step S31.

### <<Step S31>>

Because of the termination of the ink circulation process, step S31 is to change the display screen on the operating and display unit 8 to the home screen depicted in Figure 9, then the apparatus enters a waiting state. Then, in this waiting state, even if the apparatus is temporarily powered off for some reason, the apparatus can execute the operations described above iteratively again when the set time comes on a set day of the week if the power recovers, because settings information set as in Figure 10 is stored in the flash ROM, as mentioned in a dotted block.

For instance, even if the apparatus is powered off on Saturday to Sunday or at night, the apparatus can execute the operations described above if the power is recovered until a start time of the ink circulation process. Again, with the apparatus placed in a waiting state at the step 31, the processing is continued, returning to step S10 in Figure 12.

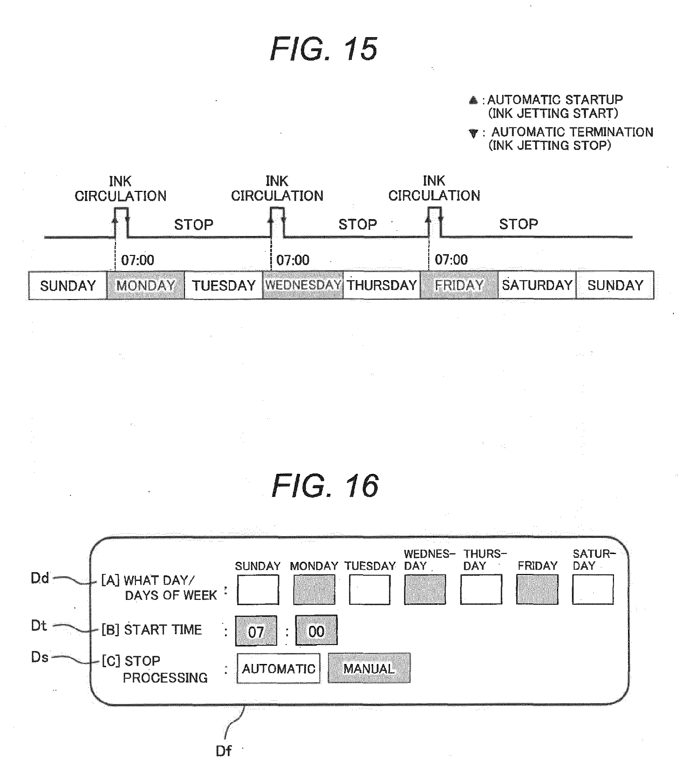

Assuming that the ink circulation process described above is scheduled for one week, how the process is run is depicted in Figure 15. Here, "▲" denotes an automatic startup (starting ink jetting) and "▼" denotes an automatic termination (stopping ink jetting).

As in Figure 10, the apparatus is assumed to be set to start the ink circulation process at seven o'clock in the morning on Monday, Wednesday, and Friday and stop the process automatically. Therefore, as in Figure 15, the ink circulation process is started automatically at seven o'clock on Monday and the ink circulation is stopped automatically when a duration of ink circulation has elapsed according to (3a) or (3b) in the step S29. The process is run in the same way on Wednesday and Friday.

### <Explanation on processing of the printing process>

Next, explanations are provided about a processing flow of the printing process (step S15) when manual stop ("manual") is chosen for a setting item "[C] stop processing, automatic/manual (Ds)" in Figure 10, using Figures 16 to 19. Again, this printing process is also started up with the print head 2 set secured in the head receptacle unit 3.

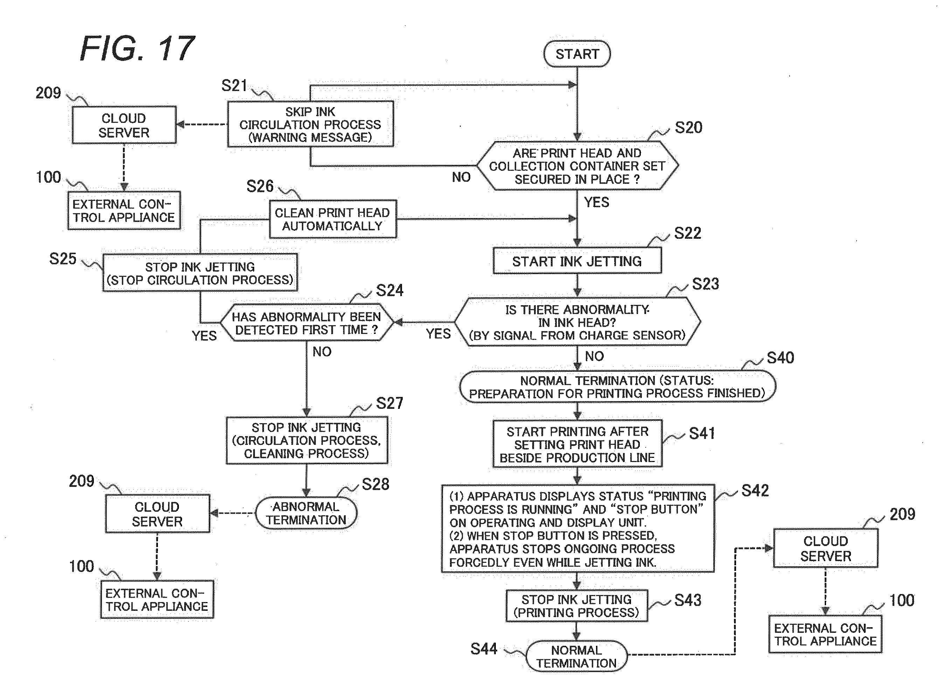

Figure 16 depicts a setting screen allowing an operator to choose the printing process and "manual" is chosen for "[C] stop processing, automatic/manual (Ds)". Therefore, ink jetting is stopped manually instead of being stopped automatically as in the ink circulation process. Accordingly, ink jetting remains continuing unless a command to stop it manually is given. A concrete processing flow is depicted in Figure 17.

### <<Steps S20 to S28>>

Because processing in steps S20 to S28 is the same as the processing depicted in Figure 13, their description is omitted. Then, if a decision is made that the print head 2 is free of abnormality (decided NO) at the step S23, a transition is made to step S40.

### <<Step S40>>

Step S40 is to terminate the ongoing process normally, following the completion of abnormality decision processing for the print head 2, as a decision is made that the print head 2 is free of abnormality. Accordingly, preparation. for the printing process has finished in this state and an actual printing process that follows is to be run. Upon completion of the step S40, a transition is made to step S41.

### <<Step S41>>

Step S41 is to start a printing operation after an operator removes the print head 2 from the head receptacle unit 3 and sets the print head 2 secured to the support bracket 13 beside the production line (see Figure 1) to carry out actual printing. When this printing operation is started, a transition is made to step S42.

### <<Step S42>>

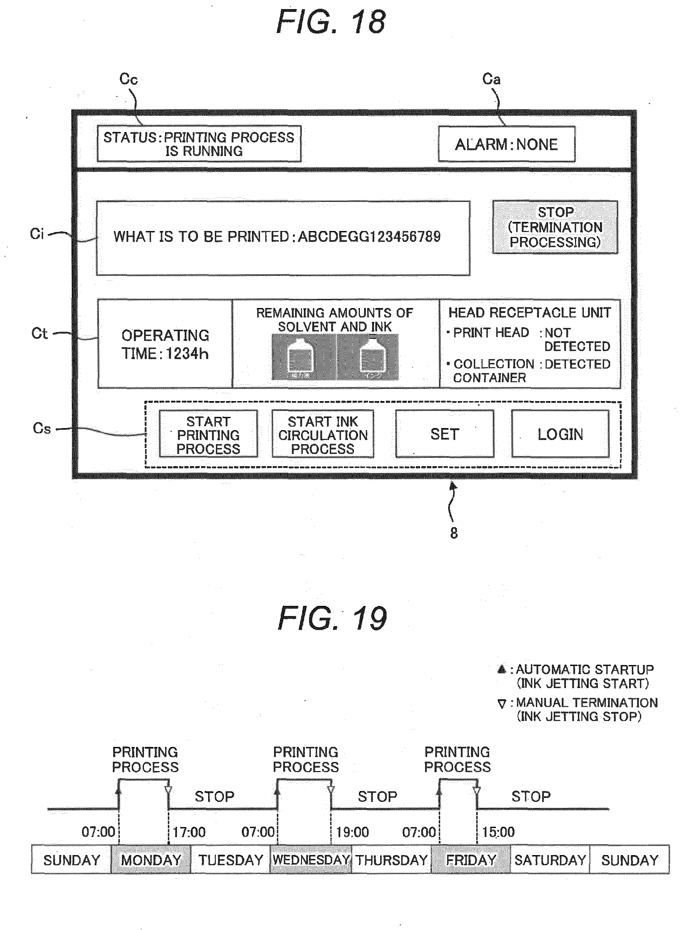

In step S42, while keeping on ink jetting to perform the printing operation, the apparatus executes processing operations which are described below. First, the home screen as is depicted in Figure 18 is displayed. In Figure 18, the current status (Cc) of the inkjet marking apparatus is presented in the home screen; the status that is now displayed indicates that the printing process is running. Also, as for the alarm (Ca) to indicate an abnormal state, "none" is displayed which indicates no abnormality.

Again, because the printing process is ongoing now, the print head 2 is removed from the head receptacle unit 3. Therefore, it is displayed that the print head is "not detected" for the "status as to whether or not the print head and the collection container are set secured in place in the head receptacle unit" in the status display field (Ct).

Also, in a central area of the screen, on the right side of the entry field for what is to be printed (Ci) for setting what is to be printed, there is provided a Stop button (Cd). When an operator wants to stop the printing process, ink jetting can be stopped by touching the Stop button. Therefore, when the Stop button (Cd) is pressed by an operator when this display screen is displayed, the printing process is terminated forcedly and ink jetting is stopped.

### <<Step S43>>

Step S43 is to terminate the printing process and stop ink jetting, since the Stop button has been pressed by an operator during execution of the processing operations in step S42. Upon stopping ink jetting, a transition is made to step S44. Again, unless the Stop button is pressed, the printing process remains continuing.

### <<Step S44>>

In step S44, the printing process has been terminated normally by an operator and, therefore, the inkjet marking apparatus is placed in a waiting state with the home screen displayed on its operating and display unit 8. Likewise, the apparatus sends information that the printing process has terminated normally to the cloud server 209 and, furthermore, the information can be sent to the external control appliances through means such as e-mail. Thereby, it is possible to inform an operator in a remote place of the printing process termination.

Assuming that the printing process described above is scheduled for one week, how the process is run is depicted in Figure 19. Here, "A" denotes an automatic startup (startingink jetting) and "∇ " denotes a manual termination by an operator (stopping ink jetting).

As in Figure 16, the apparatus is assumed to be set to start the printing process at seven o'clock in the morning on Monday, Wednesday, and Friday and stop the process manually. Therefore, as in Figure 19, the printing process is started automatically at seven o'clock on Monday and, when the Stop button is pressed by an operator according to the step S41 (see Figure 17), the printing process is stopped at 17:00 accordingly.

On Wednesday, the printing process is stopped at 19:00 later than the time when the printing process is stopped on Monday. On Friday, the printing process is stopped at 15:00 before the time when the printing process is stopped on Monday. As above, the printing process is automatically started and executes printing also when the printing process is run and, subsequently, the printing process can be stopped by an operator at any optional time.

### <Explanation on diverse setting of the printing process>

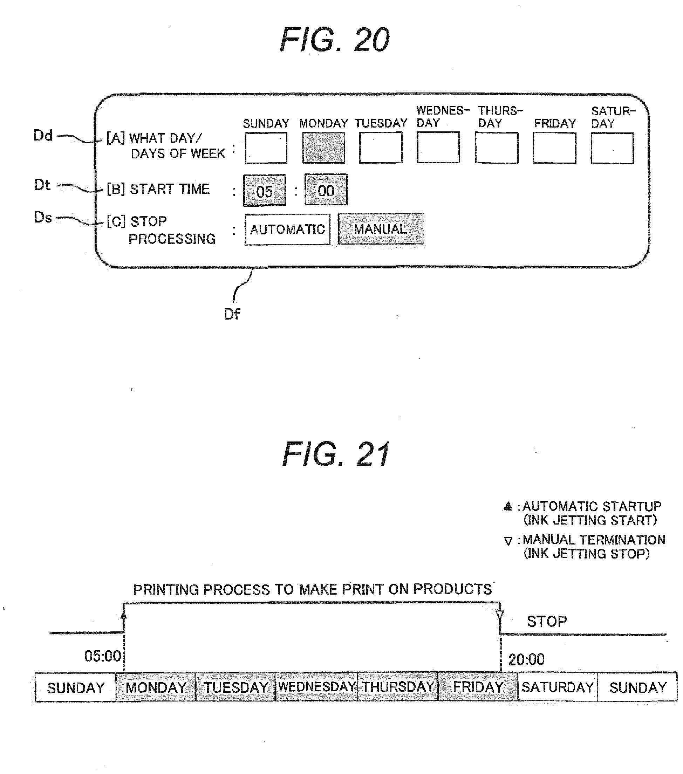

While the printing process is started up at the same time instant in the embodiment described above, it is possible to perform setting as follows. That is, by modifying the settings in the setting field (Df) of the setting screen depicted in Figure 10, it is possible to reconfigure settings as is depicted in Figure 20 (the setting field (Df) extracted from the setting screen on the operating and display unit 8).

In this instance, a day of the week to start the process is set to "Monday", start time is set to "five o'clock in the morning", and stop processing is set to "manual" in the setting screen.

According to this setting, it is possible to perform usage as below: as is depicted in Figure 21, an automatic startup is executed at five o'clock in the morning with warming by heater taken in consideration, the process of printing on products starts to run at 6 o'clock in the morning, and the printing process is terminated at 20:00 at night, when the Stop button is pressed by an operator.

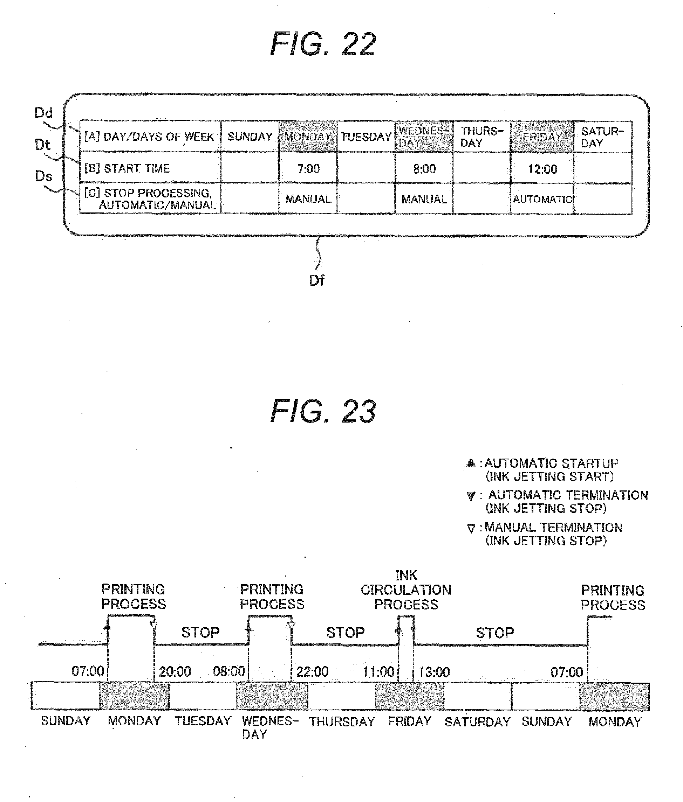

Furthermore, it is possible to perform usage in which start time and stop processing are set on each selected day of the week. An example hereof is explained with Figure 22 and Figure 23.

Figure 22 depicts the setting field (Df) extracted from the setting screen on the operating and display unit 8 and days of the week on which to run the printing process or the ink circulation process are set to "Monday", "Wednesday", and "Friday". Then, the start time to execute a startup on Monday is set to "07:00", the start time to execute a startup on Wednesday is set to "08:00", and the start time to execute a startup on Friday is set to "12:00".

Moreover, stop processing is set to "manual" on Monday and Wednesday so that the printing process will be run and set to "automatic" on Friday so that the ink circulation process will be run. Then, operation of the inkjet marking apparatus based on this setting is depicted in Figure 23.

According to Figure 23, on Monday, the printing process is started up to run at seven o'clock in the morning and terminated by an operator at 20:00 at night. Also, on Wednesday, the printing process is started up to run at eight o'clock in the morning and terminated by an operator at 22:00 at night. Furthermore, on Friday, the ink circulation process is started up to run at eleven o'clock and automatically terminated at 13:00.

According to several embodiments of the invention disclosed herein, described hereinbefore, it is possible to yield advantageous effects as follows: the ink circulation process and the printing process can be run at any optional time; the inkjet marking apparatus can be started up quickly; after the apparatus is powered off, the ink circulation process and the printing process can be run when power is connected to the apparatus without specifying new settings. In addition, because diversified setting can be performed through the setting screen according to usage environments of the inkjet marking apparatus, an advantageous effect of greatly improving usability can be expected.

### <Explanation on interworking among the inkjet marking apparatus, the cloud server, and an external control appliance>

While the embodiments described hereinbefore concern an example in which settings information is input through the use of the operating and display unit 8 with which the inkjet marking apparatus 600 is equipped, it is possible to input settings information from each of the external control appliances 100 via the cloud server 209.

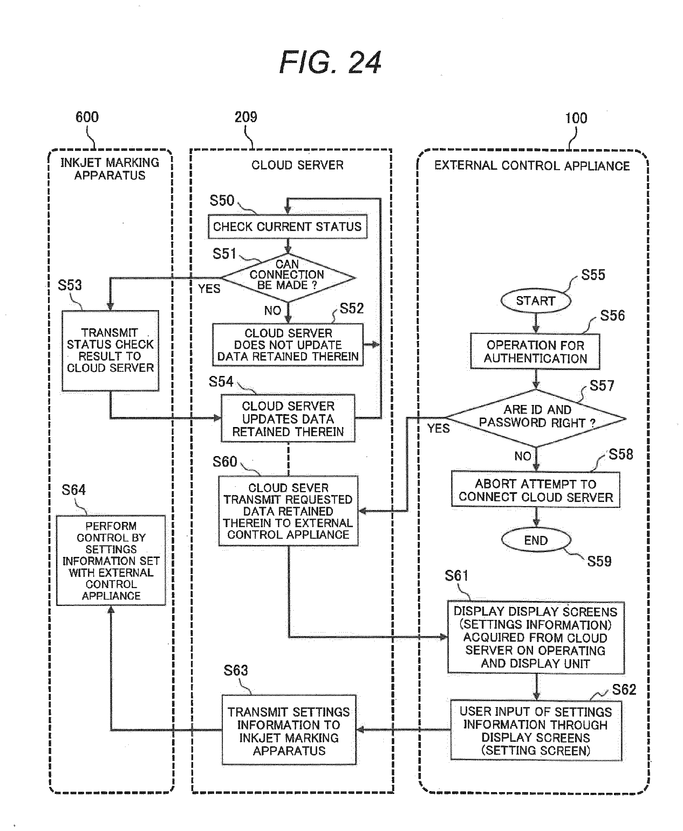

In an embodiment of the invention disclosed herein, system equipment includes the foregoing inkjet marking apparatus, a server connected to the inkjet marking apparatus via the first communication network and retaining information set through a setting screen of the inkjet marking apparatus, and an external control appliance connected to the server via the second communication network and equipped with an external operating and display unit which displays a setting screen acquired from the server to set at least a start time to start ink jetting, wherein the external control appliance transmits a start time input through the setting screen on the external operating and display unit to the inkjet marking apparatus via the server and controls the inkjet marking apparatus based on the start time. Here, input of settings information is performed in substantially the same way as with the operating and display unit 8, but the form in which that information is displayed differs partly. An example hereof is explained below based on Figures 24 to 26.

Figure 24 depicts a processing flow among the inkjet marking apparatus 600, the cloud server 209, and an external control appliance 100. Each piece of equipment is placed in a normal operating state after powered on.

### <<Step S50>>

At step S50, the cloud server 209 executes a periodical check of the current status of the inkjet marking apparatus 600. Upon execution of the periodical check, a transition is made to step S51.

### <<Step S51>>

At step S51, it is verified whether or not a connection can be made between the cloud server 209 and the inkjet marking apparatus 600 via the communication network 214A. Unless the connection can be made, a transition is made to step S52; otherwise, if the connection can be made, a transition is made to step S53.

### <<Step S52>>

At step S52, the cloud server 209 does not update a variety of information recorded therein in the event of failure of the connection between the cloud server 209 'and the inkjet marking apparatus 600. Then, the cloud server 209 re-executes processing in the step S50 after elapse of a certain time.

### <<Step S53>>

At step S53, the inkjet marking apparatus 600 checks display screens like the setting screen and a message screen described previously and transmits information set through the display screens to the cloud server 209 via the communication network 214A. That is, it transmits, as necessary, information set through the display screens in response to a request from the server 209. Thereby, through communication with the cloud server 209, each of the external control appliances 100 allows their user to view information set through the display screens and retained in the cloud server. When this is completed, a transition is then made to step S54.

### <<Step S54>>

At step S54, the cloud server 209 updates information set through the display screens of the inkjet marking apparatus 600 and retained therein to thus transmitted new information set through the display screens. Then, the cloud server 209 re-executes processing in the step S50 after elapse of a certain time, thus updating information set through the display screens of the inkjet marking apparatus 600 and retained therein to the latest information. As above, the cloud server 209 executes the steps S50 to S54 iteratively at every certain interval of time.

### <<Step S55>>

Next, at step S55 which is performed on an external control appliance 100, a user operates the external control appliance 100 and starts connection processing to make a communication between the external control appliance 100 and the inkjet marking apparatus 600. The external control appliance 100 is connected to the cloud server 209 via the communication network 214B. When this is completed, a transition is made to step S56.

### <<Step S56>>

At step S56, the user inputs, to the external control appliance 100, an ID and password necessary for making a connection between the external control appliance 100 and the inkjet marking apparatus 600. When this is completed, a transition is made to step S57.

### <<Step S57>>

At step S57, a decision is made as to whether the thus input ID and password are right (YES/NO) by comparing the ID and password input at the step S56 against the ID and password pre-recorded in the cloud server 209.

Then, if a decision is made that the ID and password are not right (NO), a transition is made to step S58. Otherwise, if a decision is made that the ID and password are right (YES), the external control appliance 100 and the cloud server 209 start communication and a transition is made to step S60. Thereby, the connections are established for communication between the external control appliance 100 and the cloud server 209 and communication between the cloud server 209 and the inkjet marking apparatus 600.

### <<Step S58>>, <<Step S59>>

Step S58 is to display the fact that either the ID or the password input at the step S56 is not right on the external control appliance 100 and abort the attempt to make a connection through communication. Then, step S59 is to terminate the connection start processing for communication between the external control appliance 100 and the inkjet marking apparatus 600.

### <<Step S60>.>

At step S60, the cloud server 209 reads information set through the display screens of the inkjet marking apparatus 600 and recorded therein and transmits that information to the external control appliance 100 via transmission means. This information that is set through the display screens of the inkjet marking apparatus 600 and transmitted from the cloud server 209 to the external control appliance 100 is substantially the same information as displayed on the operating and display unit 8 of the inkjet marking apparatus 600. Explanation about such information has already been made and, therefore, further description is omitted here. When this is completed, a transition is then made to step S61.

### <<Step S61>>

At step S61, the external control appliance 100 displays information set through the display screens, stored in the cloud server 209, after acquired from the inkjet marking apparatus 600, on its external operating and display unit 101 (see Figure 1) in an unfolding manner.

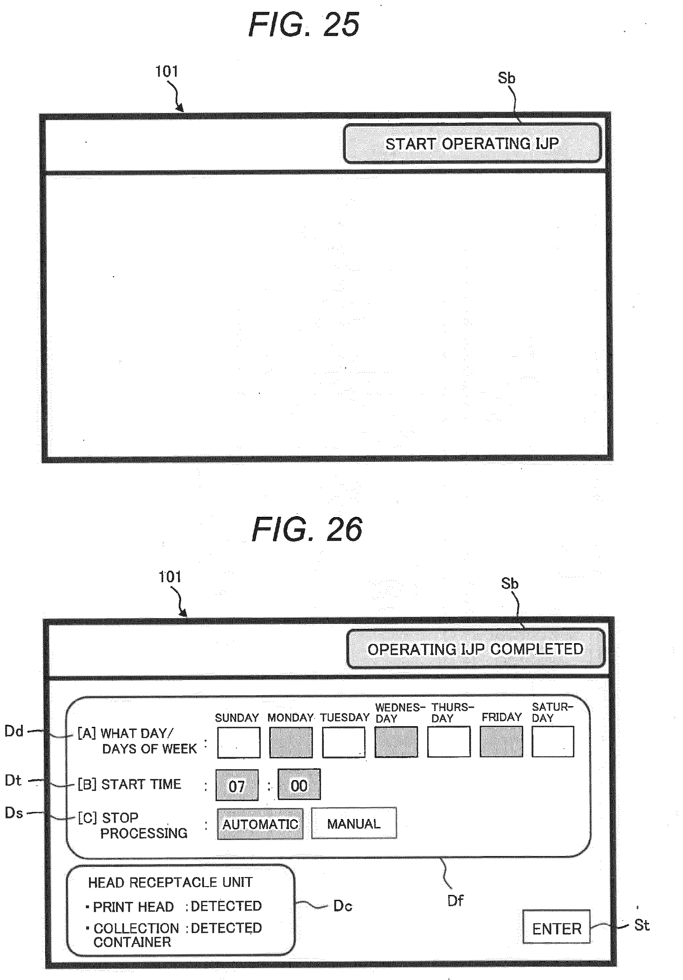

Figure 25 depicts the external operating and display unit 101 of an external control appliance 100. On the screen of this external operating and display unit 101, a button to start operating IJP (Sb) is displayed (wherein IJP stands for the inkjet marking apparatus). In this state, when an operator operates the button to start operating IJP (Sb), the setting screen as is depicted in Figure 10 is displayed. This setting screen displays information retained in the cloud server 209.

A concrete display screen displaying such information is depicted in Figure 26. In a middle area of the display screen, a setting field (Df) is displayed for the user to set options to run the ink circulation process and the printing process. Within the setting field (Df), the following items are set: what day/days of the week (Dd), start time (Dt), and stop processing, automatic/manual (Ds) which is how to stop ink jetting. This field allows the user to set a specific time to start the ink circulation process or the printing process.

Also, under the setting field (Df), setup information as to setting the print head 2 and the collection container 4 secured in place in the head receptacle unit 3 is displayed. Displaying this setup information is performed, for example, using a result of the "status as to whether or not the print head and the collection container are set secured in place in the head receptacle unit" displayed in the status display field (Ct) on the home screen of Figure 9. Again, displaying the setup information may be performed using information invoked from any other screen. when this setting screen is displayed, a transition is made to step S62.

### <<Step S62>>

At step S62, the user performs a necessary input operation based on the information displayed in the step S61. As with Figure 10, in a row of "[A] what day/days of the week (Dd)" for setting a day/days of the week on which to carry out the ink circulation process or the printing process, the days of one week from "Sunday" to "Saturday" are presented in cells. By touching one of these view cells of "what day/days of the week", the user can choose a day of the week on which to carry out the ink circulation process or the printing process. In the current display, multiple days, Monday, Wednesday, and Friday are chosen.

Then, in a row of "[B] start time (Dt)" for setting time to start the ink circulation process or the printing process, cells are presented for the user to enter time that is displayed in 24-hour notation. By entering a specific time in the "start time" view cells, the user can choose the time when the apparatus starts to run the ink circulation process or the printing process. In the current display, seven o'clock in the morning is chosen.

Then, in a row of "[C] stop processing, automatic/manual (Ds)", cells are presented for the user to choose an ink circulation process mode in which ink jetting is automatically stopped or a printing process mode in which ink jetting is manually stopped by an operator. By touching either of these "automatic" and "manual" view cells, the user can set whether to perform automatic stop processing of the ink circulation process or to perform manual stop processing of the printing process. In the current display, the "automatic" cell is chosen so that the ink circulation process will be stopped automatically.

Then, once the items, what day/days of the week (Dd), start time (Dt), and stop processing, automatic/manual (Ds) have been determined, information of these items is fixed as settings information by touching the Enter button (St). The fixed settings information is transmitted to the cloud server 209 via the communication network 214B. As described above, the user is allowed to specify the settings of the inkjet marking apparatus 600 via the cloud server 209. Upon completion of the input operation, a transition is made to step S63.

Note that the button to start operating IJP (Sb) is changed to the operating IJP completed button that is displayed and, by operating the operating IJP completed button again, a return is made to the display screen depicted in Figure 25.

### <<Step S63>>

At step S63, the cloud server 209 transmits the settings information input at the external control appliance 100 to the inkjet marking apparatus 600 via the communication network 214A. When this processing is complete, a transition is made to step S64. Again, the setting operation with the external control appliance 100 can be performed equally as if it were done by operating the operating and display unit 8 of the inkjet marking apparatus 600.

### <<Step S64>>

At step S64, based on the settings information set with the external control appliance 100, the inkjet marking apparatus executes the processing flows depicted in Figure 12, Figure 13, and Figure 17.

Accordingly, it is possible to yield advantageous effects as follows: the ink circulation process and the printing process can be run at any optional time; the inkjet marking apparatus can be started up quickly; and, after the apparatus is powered off, the ink circulation process and the printing process can be run when power is connected to the apparatus without specifying new settings. In addition, an operation to set the startup of the ink circulation process or the printing process can be performed with an external control appliance. Therefore, an operator does not need to take the trouble to go to a place where the inkjet marking apparatus is installed and usability improves.

### <Explanation on interworking between the inkjet marking apparatus and an external control appliance>

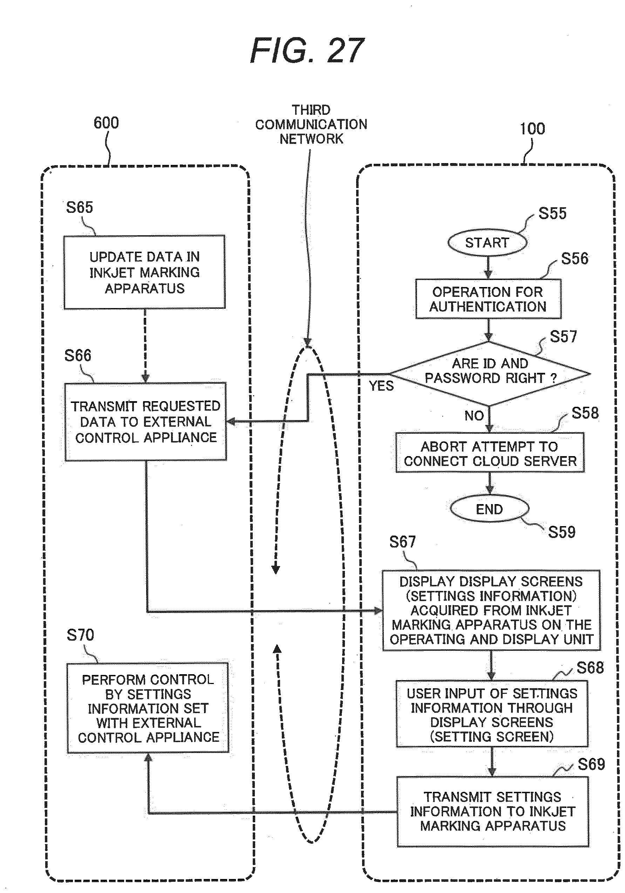

While, in the embodiment described above with Figures 24 to 26, the inkjet marking apparatus 600 and an external control appliance 100 perform communication via the cloud server 209. It is also possible to perform setting through a direct communication that is performed between the inkjet marking apparatus 600 and an external control appliance 100 without intervention of the cloud server 209. An example hereof is depicted in Figure 27.

In an embodiment of the invention disclosed herein, system equipment includes an external control appliance connected to the foregoing inkjet marking apparatus via a third communication network and equipped with an external operating and display unit which displays a setting screen acquired from the inkjet marking apparatus to set at least a start time to start ink jetting, wherein the external control appliance transmits a start time input through the setting screen on the external operating and display unit to the inkjet marking apparatus via the third communication network and controls the inkjet marking apparatus based on the start time. Here, input of settings information is performed in substantially the same way as a way of input in the embodiment depicted in Figure 24. This further embodiment is explained below based on Figure 27.

Figure 27 depicts a processing flow between the inkjet marking apparatus 600 and an external control appliance 100. Each piece of equipment is placed in a normal operating state after powered on. Also, the inkjet marking apparatus 600 and the external control appliance 100 are connected via the communication network as depicted in Figure 1.

### <<Step S55>> to <<Step S59>>

Step S55 to step S59 are the same as control steps in Figure 24 and, therefore, their descriptions are omitted. Again, as for ID and password matching at step S57, a decision is made as to whether an ID and password input are right (YES/NO) by being compared against an ID and password as true ones pre-recorded in the inkjet marking apparatus 600.

### <<Step S65>>

Step S65 is to update and store a variety of current information in the inkjet marking apparatus 600. The variety of information includes display screens and is as explained in the foregoing examples of embodiment of the inkjet marking apparatus. This control step is processing that is performed by the inkjet marking apparatus 600.

### <<Step S66>>

At step S66, upon receiving a request from the external control appliance 100, the inkjet marking apparatus 600 transmits requested data to the external control appliance 100. Requested data is data set through the display screens related to the setting screen among others, as described previously.

### <<Step S67>>

At step S67, the external control appliance displays information set through the display screens, acquired from the inkjet recording apparatus 600, on its external operating and display unit 101 (see Figure 1) in an unfolding manner. The display screens are the same as depicted in Figure 25 and Figure 26. When the setting screen as is depicted in Figure26 is displayed, a transition is made to step S68.

### <<Step S68>>

At step S68, the user performs a necessary input operation based on the information displayed in the step S67. As is depicted in Figure 26, in a row of "[A] what day/days of the week (Dd)" for setting a day/days of the week to carry out the ink circulation process or the printing process, the days of one week from "Sunday" to "Saturday" are presented in cells. By touching one of these view cells of "what day/days of the week", the user can choose a day of the week to carry out the ink circulation process or the printing process. In the current display, multiple days, Monday, Wednesday, and Friday are chosen.

Then, in a row of "[B] start time (Dt)" for setting time to start the ink circulation process or the printing process, cells are presented for the user to enter time that is displayed in 24-hour notation. By entering a specific time in the "start time" view cells, the user can choose the time when the apparatus starts to run the ink circulation process or the printing process. In the current display, seven o'clock in the morning is chosen.

Then, in a row of "[C] stop processing, automatic/manual (Ds)", cells are presented for the user to choose an ink circulation process- mode in which ink jetting is automatically stopped or a printing process mode in which ink jetting is manually stopped by an operator. By touching either of these "automatic" and "manual" view cells, the user can set whether to perform automatic stop processing of the ink circulation process or to perform manual stop processing of the printing process. In the current display, the "automatic" cell is chosen so that the ink circulation process will be stopped automatically.

Then, once the items, what day/days of the week (Dd), start time (Dt), and stop processing, automatic/manual (Ds) have been determined, information of these items is fixed as settings information by touching the Enter button (St). Upon fixing the settings information, a transition is made to step S69.

### <<Step S69>>

At step S69, the external control appliance 100 transmits the settings information input to it to the inkjet marking apparatus 600 via the third communication network. When this processing is complete, a transition is made to step S70. Again, the setting operation with the external control appliance 100 can be performed equally as if it was done by operating the operating and display unit 8 of the inkjet marking apparatus 600.

### <<Step S70>>

At step S70, based on the settings information set with the external control appliance 100, the inkjet marking apparatus executes the processing flows depicted in Figure 12, Figure 13, and Figure 17.

Accordingly, it is possible to yield advantageous effects as follows: the ink circulation process and the printing process can be run at any optional time; the inkjet marking apparatus can be started up quickly; and, after the apparatus is powered off, the ink circulation process and the printing process can be run when power is connected to the apparatus without specifying new settings. In addition, an operation to set the startup of the ink circulation process or the printing process can be performed with an external control appliance. Therefore, an operator does not need to take the trouble to go to a place where the inkjet marking apparatus is installed and usability improves.

As described so far, the present invention disclosed herein resides in an inkjet marking apparatus equipped with a print head including a nozzle which spouts out supplied ink while the ink turns into particles, a charging electrode which gives charge to ink particles spouted out from the nozzle, a deflecting electrode which deflects the ink particles charged by the charging electrode, and a gutter which collects non-used ink not used for printing; a main unit equipped with an ink supply path to supply ink in an ink container to the print head, an ink collection path to collect ink not used for printing into the ink container, a solvent supply path to supply a solvent in a solvent container to the ink container, and flow rate regulators which regulate flows of the ink and the solvent in these respective paths; a main unit controller which controls operation of the flow rate regulators in the main unit and the print head; and a head receptacle unit including a head holding part to set and hold the print head secured in place and a print head detector which detects that the print head has been set secured in place and is characterized in that the main unit controller starts jetting of the ink from the nozzle when a preset start time comes, provided that it is detected that the print head has been set secured in the head receptacle unit.

In addition, the present invention is characterized in that system equipment includes the foregoing inkjet marking apparatus, a server which is connected to the inkjet marking apparatus via the first communication network and retains information set through a setting screen of the inkjet marking apparatus, and an external control appliance which is connected to the server via the second communication network and equipped with an external operating and display unit which displays a setting screen acquired from the server to set at least a start time to start ink jetting, wherein the external control appliance transmits a start time input through the setting screen on the external operating and display unit to the inkjet marking apparatus via the server and controls the inkjet marking apparatus based on the start time.

According to the foregoing descriptions, it possible to yield at least one or more advantageous effects as follows: the ink circulation process and the printing process can be run at any optional time; the inkjet marking apparatus can be started up quickly; after the apparatus is powered off, the ink circulation process and the printing process can be run when power is connected to the apparatus without specifying new settings; and setting of the ink circulation process and the printing process can be performed from an external terminal.

Note that the present invention is not limited to several examples described hereinbefore and various modifications are included therein. The foregoing examples are those described in detail to explain the present invention to make it easy to understand and the invention is not necessarily limited to those including all components described. In addition, a subset of the components of an example may be replaced by components of another example and components of another example may be added to the components of an example. As for the components of each example, another or other components may be added to an example, a component or components may be removed from an example, or a component of an example may be replaced by another component.

### Reference Signs List

1... main unit, 2... print head, 3... head receptacle unit, 4... collection container, 5... cable (for the print head), 6... cable (for the head receptacle unit), 7... main unit controller, 8... operating and display unit, 9... IoT site server, 10... cable, 11... belt conveyor, 12A... printing target object, 12B... printing target object, 13... support bracket, 14... network, 15... personal computer, 16... smartphone, 17... tablet, 18... Start button, 19... Stop button, 20... display, 21... nozzle, 23... charging electrode, 24... deflecting electrode, 24A... positive electrode, 24B... ground electrode, 25... gutter, 26... changeover valve, 27... thermal sensor A, 28... magnetic sensor C, 28A... electrical wire, 29... heater, 30... thermal sensor C, 31... main ink container, 31A... liquid level sensor, 32... auxiliary ink container, 33... solvent container, 34... pump (for supply), 35... pump (for collection), 36... pump (for circulation), 37... pump (for solvent), 38... thermal sensor D, 39... filter (for supply), 40... filter (for collection), 41... filter (for nozzle cleaning), 43... filter (for head cleaning), 45... viscosity measuring instrument, 46... pressure regulating valve, 47... pressure sensor, 48... charge sensor, 49... solenoid valve (for supply), 50... solenoid valve (for collection), 53... solenoid valve (for solvent replenishment), 54... solenoid valve (for ink replenishment), 55... solenoid valve (for nozzle cleaning), 56... solenoid valve (for head cleaning), 57... solenoid valve (for viscosity measurement), 58... solenoid valve (for main unit circulation), 59... solenoid valve (for circulation), 60... pump (for drying), 61... pump (for suction), 62... exhaust duct connection port, 68A... ink, 68B... ink particles, 68B1... ink particles, 68B2... electrification charge, 68C... ink, 69A... solvent, 71... cleaning tank, 71A... coupling port, 72... cleaning nozzle, 72A... liquid discharge opening A, 72B... liquid discharge opening B, 73... air supply nozzle, 74... float, 75... magnet A, 76... magnetic sensor A, 76A... electrical wire, 77... container, 77A... coupling part, 77B... liquid reservoir, 77C... internal threaded part, 78... divider, 78A... liquid inflow opening, 78B... liquid outflow opening, 79... holder, 80... thermal sensor B, 80A... electrical wire, 81... cleaning block, 81A... head holding part, 81B... head insertion port, 81C... opening, 81D... flow path A, 81E... flow path B, 81F... flow path C, 82... lid hinge, 83... lid member, 84... magnetic sensor B, 84A... electrical wire, 85... cover, 86... magnet B, 87... magnet C, 88... suction joint, 89... liquid joint, 90... air joint, 91... fixing part, 92... fixing jig (for the conveyor), 93... fitting part, 94... head base, 95... protective cover, 97... antenna, 100... external control appliance, 101... operating and display unit, 201... network, 209... cloud server, 214A... communication network, 214B... communication network, 301... MPU, 302... bus line, 306... ROM, 307... RAM, 311... viscosity measurement circuit, 312... pressure detection circuit, 313... liquid level detection circuit, 314... pump controlling circuit, 315... solenoid valve driving circuit, 316... temperature detection circuit, 317... heater controlling circuit, 322... collection container sensor detection circuit, 323... print head detection circuit, 331... excitation voltage generating circuit, 332... deflection voltage generating circuit, 341... phase search-use charging signal generating circuit, 342... printing-use charging signal generating circuit, 343... D/A converter, 344... amplifier circuit, 351... phase decision circuit, 352... A/D converter, 353... amplifier circuit, 501 to 503... inkjet marking system, 600... inkjet marking apparatus.

## Claims

1. An inkjet marking apparatus comprising:
a print head including a nozzle which spouts out supplied ink while the ink turns into particles, a charging electrode which gives charge to ink particles spouted out from the nozzle, a deflecting electrode which deflects the ink particles charged by the charging electrode, and a gutter which collects non-used ink not used for printing;
a main unit including an ink supply path to supply ink in an ink container to the print head, an ink collection path to collect the ink not used for printing into the ink container, a solvent supply path to supply a solvent in a solvent container to the ink container, and flow rate regulators which regulate flows of the ink and the solvent in these respective paths;
a main unit controller which controls operation of the flow rate regulators in the main unit and the print head; and
a head receptacle unit including a head holding part to set and hold the print head secured in place and a print head detector which detects that the print head has been set secured in place,
wherein the main unit controller starts jetting of the ink from the nozzle when a preset start time comes, provided that it is detected that the print head has been set secured in the head receptacle unit.

2. The inkjet marking apparatus according to claim 1,
wherein the main unit controller starts jetting of the ink from the nozzle at timing when the start time has come on a preset day of the week.

3. The inkjet marking apparatus according to claim 1,
wherein the main unit controller provides a setting in which stop processing to stop jetting the ink is settable between "automatic" and "manual" and, if "automatic" is chosen as the stop processing, automatically stops jetting of the ink from the nozzle after letting the ink spout out from the nozzle for a given amount of time.

4. The inkjet marking apparatus according to claim 3,
wherein if "manual" is chosen as the stop processing, the main unit controller stops jetting of the ink from the nozzle in response to an operation by an operator.

5. The inkjet marking apparatus according to claim 2,
wherein the main unit controller provides a screen for setting, displayed on an operating and display unit included in the main unit, and allows, via the screen, an operator/user to set options including what day/days of the week and start time to jet the ink from the nozzle and which of "automatic" and "manual" stop processing to stop jetting the ink from the nozzle.

6. The inkjet marking apparatus according to claim 1,
wherein the main unit controller is equipped with transmission means to transmit an abnormality event to an external control appliance connected via a communication network upon detection of abnormality occurring when the ink is jetted from the nozzle.

7. The inkjet marking apparatus according to claim 5,
wherein the main unit controller causes a memory device which keeps its contents stored even if power is turned off to store settings information input through the operating and display unit with regard to the options including what day/days of the week and start time to jet the ink and which of "automatic" and "manual" stop processing to stop jetting of the ink, and controls jetting of the ink based on the settings information in the memory device when the power is turned on again.

8. The inkjet marking apparatus according to claim 5,
wherein the main unit controller runs an ink circulation process to prevent sticking in the paths if "automatic" stop processing to stop jetting the ink from the nozzle has been chosen.

9. The inkjet marking apparatus according to claim 5,
wherein the main unit controller runs a printing process to make a print on products if "manual" stop processing to stop jetting the ink from the nozzle has been chosen.

10. The inkjet marking apparatus according to claim 5,
wherein the main unit controller provides a screen for setting, displayed on an operating and display unit included in the main unit, and allows, via the screen, an operator/user to set the options including what day/days of the week and start time to jet the ink from the nozzle and which of "automatic" and "manual" stop processing to stop jetting the ink from the nozzle with respect to each day of the week.

11. The inkjet marking apparatus according to claim 5,
wherein on the screen displayed on the operating and display unit, there are displayed a setting display field for an operator/user to set the options including what day/days of the week and start time to jet the ink and which of "automatic" and "manual" stop processing to stop jetting the ink and, in addition, a fixing display field for an operator/user to fix conditions set on the same screen.

12. An inkjet marking system **characterized by** comprising:
the inkjet marking apparatus as described in any one of claims 1 to 10;
a server which is connected to the inkjet marking apparatus via a first communication network and retains information set through a setting screen of the inkjet marking apparatus; and
an external control appliance which is connected to the sever via a second communication network and equipped with an external operating and display unit which displays the setting screen acquired from the server to set at least the start time to start jetting of the ink, wherein the external control appliance transmits the start time input through the setting screen on the external operating and display unit to the inkjet marking apparatus via the server and controls the inkjet marking apparatus based on the start time.

13. The inkjet marking system according to claim 12,
wherein the external control appliance provides the setting screen, displayed on the external operating and display unit, and allows, via the setting screen, an operator/user to set options including what day/days of the week and start time to jet the ink from the nozzle and which of "automatic" and "manual" stop processing to stop jetting the ink from the nozzle.

14. The inkjet marking system according to claim 13,
wherein on the setting screen displayed on the external operating and display unit, there are displayed a setting display field for an operator/user to set the options including what day/days of the week and start time to jet the ink and which of "automatic" and "manual" stop processing to stop jetting the ink and, in addition, a fixing display field for an operator/user to fix conditions set on the same screen.

15. The inkjet marking system according to claim 12,
wherein the external control appliance provides the setting screen, displayed on the external operating and display unit, and allows, via the setting screen, an operator/user to set the options including what day/days of the week and start time to jet the ink from the nozzle and which of "automatic" and "manual" stop processing to stop jetting the ink from the nozzle with each day of the week.

16. The inkjet marking system according to claim 14,
wherein on the setting screen displayed on the external operating and display unit, there are displayed a setting display field for an operator/user to set the options including what day/days of the week and start time to jet the ink and which of "automatic" and "manual" stop processing to stop jetting the ink and, in addition, a fixing display field for an operator/user to fix conditions set on the same screen.
